(19) **Europäisches Patentamt / European Patent Office / Office européen des brevets**

(11) **EP 4 598 223 A1**

(12) **EUROPEAN PATENT APPLICATION**
published in accordance with Art. 153(4) EPC

(43) Date of publication:
06.08.2025 Bulletin 2025/32

(21) Application number: 23872895.0

(22) Date of filing: 15.09.2023

(51) International Patent Classification (IPC):
*H04W 72/232* (2023.01)   *H04W 72/21* (2023.01)
*H04L 1/08* (2006.01)   *H04L 1/18* (2023.01)
*H04W 84/06* (2009.01)   *H04L 1/16* (2023.01)
*H04L 5/00* (2006.01)

(52) Cooperative Patent Classification (CPC):
H04L 1/08; H04L 1/16; H04L 1/18; H04L 5/00;
H04W 72/21; H04W 72/232; H04W 84/06

(86) International application number:
PCT/KR2023/013963

(87) International publication number:
WO 2024/071777 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.09.2022   KR 20220121913
15.11.2022   US 202263425640 P
27.02.2023   KR 20230025619
06.04.2023   KR 20230045708

(71) Applicant: LG Electronics Inc.
Yeongdeungpo-gu
Seoul 07336 (KR)

(72) Inventors:
• SHIN, Seokmin
  Seoul 06772 (KR)
• PARK, Haewook
  Seoul 06772 (KR)
• KO, Hyunsoo
  Seoul 06772 (KR)
• YANG, Suckchel
  Seoul 06772 (KR)
• BAE, Duckhyun
  Seoul 06772 (KR)

(74) Representative: Mooser, Sebastian Thomas
Wuesthoff & Wuesthoff
Patentanwälte und Rechtsanwalt PartG mbB
Schweigerstraße 2
81541 München (DE)

(54) **METHOD AND DEVICE FOR TRANSMITTING AND RECEIVING HARQ-ACK INFORMATION IN WIRELESS COMMUNICATION SYSTEM**

(57)    A method performed by a user equipment includes receiving an SIB, transmitting a random access preamble, receiving a random access response, transmitting a PUSCH, receiving DCI scheduling a PDSCH, receiving the PDSCH, and transmitting HARQ-ACK information related to reception of the PDSCH. The HARQ-ACK information is transmitted based on repetition of a PUCCH. The DCI includes a downlink assignment index (DAI) field. A repetition factor related to the PUCCH is indicated based on a codepoint based on at least one of i) a first bit of the DAI field and/or ii) a second bit of the DAI field.

[FIG. 9]

```
Start
  │
Receive SIB ─── S910
  │
Transmit random access preamble ─── S920
  │
Receive random access response ─── S930
  │
Transmit PUSCH ─── S940
  │
Receive DCI ─── S950
  │
Receive PDSCH ─── S960
  │
Transmit HARQ-ACK information ─── S970
  │
End
```

**Description**

[TECHNICAL FIELD]

The present disclosure relates to a method and a device for transmitting and receiving HARQ-ACK information in a wireless communication system.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

The following actions were introduced based on the standardization discussion.

For PUCCH repetition related to HARQ-ACK information for Msg4, a base station may configure multiple repetition factors to be used in a corresponding cell to a user equipment (UE). Afterwards, the base station may dynamically indicate the necessary repetition factor to the UE through a DAI field of DCI.

[DISCLOSURE]

[TECHNICAL PROBLEM]

According to the existing method, a DAI field (2 bits) is used to indicate a downlink assignment index. Therefore, in order to indicate one of repetition factors configured to a UE through the DAI field, an interpretation method of the DAI field needs to be specifically defined. According to the existing method, the following problems occur.

It may be ambiguous how the UE should interpret the DAI field based on the number of configured repetition factors. For example, it may be ambiguous as to which of the following 1) to 4) the UE should use to determine the repetition factor.

1) LSB of the DAI field indicates one of the configured repetition factors based on the number of configured repetition factors

2) MSB of the DAI field indicates one of the configured repetition factors based on the number of configured repetition factors

3) LSB and MSB of the DAI field indicate one of the configured repetition factors based on the number of configured repetition factors

4) LSB and MSB of the DAI field indicate one of the configured repetition factors

Depending on which of the 1) to 4) above is used to interpret the DAI field, a repetition factor that the base station indicates the UE to use and a repetition factor determined by the UE based on the DAI field may vary. For example, if a repetition factor determined by the UE based on the DAI field is lower than a repetition factor indicated by the base station, HARQ-ACK information may not be properly transmitted to the base station. For example, if a repetition factor determined by the UE based on the DAI field is higher than a repetition factor indicated by the base station, unnecessary signaling overhead may additionally occur even though HARQ-ACK information has been already transmitted to the base station.

An object of the present disclosure is to provide a method of solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method performed by a user equipment in a wireless communication system according to an embodiment of the present disclosure comprises receiving a system information block (SIB), transmitting a random access preamble, receiving a random access response (RAR), transmitting a physical uplink shared channel (PUSCH) scheduled based on an uplink (UL) grant related to the RAR, receiving downlink control information (DCI) scheduling a physical downlink shared channel (PDSCH), receiving the PDSCH, and transmitting Hybrid Automatic Repeat reQuest-ACKnowledgement (HARQ-ACK) information related to a reception of the PDSCH.

The PDSCH includes a contention resolution identity (ID). The HARQ-ACK information is transmitted based on a repetition of a physical uplink control channel (PUCCH).

A plurality of repetition factors is configured based on the SIB. The DCI includes a downlink assignment index (DAI) field.

A repetition factor related to the PUCCH among the plurality of repetition factors is indicated based on the DAI field.

The repetition factor related to the PUCCH is indicated based on a codepoint based on at least one of i) a first bit of the DAI field and/or ii) a second bit of the DAI field.

The codepoint is determined based on a number of the plurality of repetition factors.

The DAI field is a 2-bit field. The first bit may be a most significant bit (MSB) or a least significant bit (LSB) of the DAI field, and the second bit is the LSB or the MSB of the DAI field.

Based on the number of the plurality of repetition factors being 2, the codepoint may be one of two codepoints based on the first bit or the second bit.

Each of the two codepoints may be related to each repetition factor determined based on an order of the plurality of repetition factors.

Based on the number of the plurality of repetition factors being greater than 2, the codepoint may be one of four codepoints based on the first bit and the second bit.

Each of the four codepoints may be related to each repetition factor determined based on an order of the plurality of repetition factors.

The SIB may include a parameter pucch-ResourceCommon.

The parameter pucch-ResourceCommon may be related to a PUCCH resource set before a dedicated PUCCH resource configuration.

The PUCCH resource set related to the PUCCH may be configured based on one row of a table in which 16 PUCCH configurations are constituted by 16 rows.

Among indexes 0 to 15 representing the 16 rows, a value of the parameter pucch-ResourceCommon may be based on one of indexes related to a specific PUCCH format.

The specific PUCCH format may be PUCCH format 1. A value of the parameter pucch-ResourceCommon may be 11, 12, 13, 14 or 15.

Each of the PUCCH configurations may include at least one of i) a PUCCH format, ii) a first symbol, iii) a number of symbols, iv) a physical resource block (PRB) offset, and/or v) a set of initial cyclic shift (CS) indexes.

An intra-slot frequency hopping may be applied to the repetition of the PUCCH.

A user equipment (UE) operating in a wireless communication system according to another embodiment of the present disclosure includes one or more transceivers, one or more processors, and one or more memories operably connectable to the one or more processors and storing instructions that configure the one or more processors to perform operations based on being executed by the one or more processors.

The operations comprise receiving a system information block (SIB), transmitting a random access preamble, receiving a random access response (RAR), transmitting a physical uplink shared channel (PUSCH) scheduled based on an uplink (UL) grant related to the RAR, receiving downlink control information (DCI) scheduling a physical downlink shared channel (PDSCH), receiving the PDSCH, and transmitting Hybrid Automatic Repeat reQuest-ACKnowledgement (HARQ-ACK) information related to a reception of the PDSCH.

The PDSCH includes a contention resolution identity (ID). The HARQ-ACK information is transmitted based on a repetition of a physical uplink control channel (PUCCH).

A plurality of repetition factors is configured based on the SIB. The DCI includes a downlink assignment index (DAI) field.

A repetition factor related to the PUCCH among the plurality of repetition factors is indicated based on the DAI field.

The repetition factor related to the PUCCH is indicated based on a codepoint based on at least one of i) a first bit of the DAI field and/or ii) a second bit of the DAI field.

The codepoint is determined based on a number of the plurality of repetition factors.

A device according to another embodiment of the present disclosure includes one or more memories, and one or more processors operably connected to the one or more memories.

The one or more memories include instructions that configure the one or more processors to perform operations based on being executed by the one or more processors.

The operations comprise receiving a system information block (SIB), transmitting a random access preamble, receiving a random access response (RAR), transmitting a physical uplink shared channel (PUSCH) scheduled based on an uplink (UL) grant related to the RAR, receiving downlink control information (DCI) scheduling a physical downlink shared channel (PDSCH), receiving the PDSCH, and transmitting Hybrid Automatic Repeat reQuest-ACKnowledgement (HARQ-ACK) information related to a reception of the PDSCH.

The PDSCH includes a contention resolution identity (ID). The HARQ-ACK information is transmitted based on a repetition of a physical uplink control channel (PUCCH).

A plurality of repetition factors is configured based on the SIB. The DCI includes a downlink assignment index (DAI) field.

A repetition factor related to the PUCCH among the plurality of repetition factors is indicated based on the DAI field.

The repetition factor related to the PUCCH is indicated based on a codepoint based on at least one of i) a first bit of the DAI field and/or ii) a second bit of the DAI field.

The codepoint is determined based on a number of the plurality of repetition factors.

One or more non-transitory computer readable mediums according to another embodiment of the present disclosure stores one or more instructions.

The one or more instructions executable by one or more processors configure the one or more processors to perform operations.

The operations comprise receiving a system information block (SIB), transmitting a random access preamble, receiving a random access response (RAR), transmitting a physical uplink shared channel (PUSCH) scheduled based on an uplink (UL) grant related to the RAR, receiving downlink control information (DCI) scheduling a physical downlink shared channel (PDSCH), receiving the PDSCH, and transmitting Hybrid Automatic Repeat reQuest-ACKnowledgement (HARQ-ACK) information related to a reception of the PDSCH.

The PDSCH includes a contention resolution identity (ID). The HARQ-ACK information is transmitted based on a repetition of a physical uplink control channel (PUCCH).

A plurality of repetition factors is configured based on the SIB. The DCI includes a downlink assignment index (DAI) field.

A repetition factor related to the PUCCH among the plurality of repetition factors is indicated based on the DAI field.

The repetition factor related to the PUCCH is indicated based on a codepoint based on at least one of i) a first bit of the DAI field and/or ii) a second bit of the DAI field.

The codepoint is determined based on a number of the plurality of repetition factors.

A method performed by a base station in a wireless communication system according to another embodiment of the present disclosure comprises transmitting a system information block (SIB), receiving a random access preamble, transmitting a random access response (RAR), receiving a physical uplink shared channel (PUSCH) scheduled based on an uplink (UL) grant related to the RAR, transmitting downlink control information (DCI) scheduling a physical downlink shared channel (PDSCH), transmitting the PDSCH, and receiving Hybrid Automatic Repeat reQuest-ACKnowledgement (HARQ-ACK) information related to a reception of the PDSCH.

The PDSCH includes a contention resolution identity (ID). The HARQ-ACK information is received based on a repetition of a physical uplink control channel (PUCCH).

A plurality of repetition factors is configured based on the SIB. The DCI includes a downlink assignment index (DAI) field.

A repetition factor related to the PUCCH among the plurality of repetition factors is indicated based on the DAI field.

The repetition factor related to the PUCCH is indicated based on a codepoint based on at least one of i) a first bit of the DAI field and/or ii) a second bit of the DAI field.

The codepoint is determined based on a number of the plurality of repetition factors.

A base station operating in a wireless communication system according to another embodiment of the present disclosure includes one or more transceivers, one or more processors, and one or more memories operably connectable to the one or more processors and storing instructions that configure the one or more processors to perform operations based on being executed by the one or more processors.

The operations comprise transmitting a system information block (SIB), receiving a random access preamble, transmitting a random access response (RAR), receiving a physical uplink shared channel (PUSCH) scheduled based on an uplink (UL) grant related to the RAR, transmitting downlink control information (DCI) scheduling a physical downlink shared channel (PDSCH), transmitting the PDSCH, and receiving Hybrid Automatic Repeat reQuest-ACKnowledgement (HARQ-ACK) information related to a reception of the PDSCH.

The PDSCH includes a contention resolution identity (ID). The HARQ-ACK information is received based on a repetition of a physical uplink control channel (PUCCH).

A plurality of repetition factors is configured based on the SIB. The DCI includes a downlink assignment index (DAI) field.

A repetition factor related to the PUCCH among the plurality of repetition factors is indicated based on the DAI field.

The repetition factor related to the PUCCH is indicated based on a codepoint based on at least one of i) a first bit of the DAI field and/or ii) a second bit of the DAI field.

The codepoint is determined based on a number of the plurality of repetition factors.

[ADVANTAGEOUS EFFECTS]

According to embodiments of the present disclosure, a codepoint of a DAI field for indicating repetition factors is determined based on the number of repetition factors.

Accordingly, since one of the configured repetition factors is indicated based on an existing field (DAI field) of DCI, implementation complexity required to dynamically indicate one of the configured repetition factors can be minimized.

A problem of ambiguity in whether a codepoint of the DAI field indicating the repetition factor from a UE perspective is a codepoint based on the LSB (or MSB) or a codepoint based on the LSB and MSB (2 bits) can be resolved.

In addition, a problem that a repetition factor determined by a UE based on the DAI field is different from a repetition factor, that a base station indicates the UE to use, due to the ambiguity in the interpretation of the DAI field can be prevented. Problems that HARQ-ACK information is not properly transmitted or unnecessary signaling overhead is caused can be solved.

Since only 1 bit of the DAI field can be used to indicate the repetition factors based on the number of configured repetition factors, embodiments can minimize instances where available DAI is limited. As a specific example, when 2 bits of the DAI field are used, the available DAI for indicating a specific repetition factor is limited to one of four indexes (e.g., 11 among 00, 01, 10 and 11). On the other hand, when only 1 bit (LSB) of the DAI field is used, two of four indexes can be used to indicate a specific repetition factor (e.g., 01 or 11 among 00, 01, 10 and 11)

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

FIG. 1 illustrates transmission of physical channels and general signals used in the 3GPP system.

FIG. 2 illustrates a procedure of acquiring system information (SI).

FIG. 3 illustrates a random access procedure.

FIGS. 4 to 8 illustrate frequency hopping related to a repetition transmission according to an embodiment of the present disclosure.

FIG. 9 is a flow chart illustrating a method performed by a user equipment according to an embodiment of the present disclosure.

FIG. 10 is a flow chart illustrating a method performed by a base station according to another embodiment of the present disclosure.

FIG. 11 illustrates configuration of a first device and a second device according to an embodiment of the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

[NR NTN]

In order to secure wider coverage or provide wireless communication services in places where it is difficult to install a wireless communication base station, the use of NR non-terrestrial network (NTN) or LTE NTN services is being considered. While NR and LTE services, which are existing terrestrial network (TN) services, have installed base stations on the ground and provided wireless communication services to UEs, NTN services provide wireless communication services to UEs by installing base stations in non-ground locations such as satellites (geostationary orbit, low-orbit, medium-orbit, etc.), airplanes, unmanned aerial vehicles, and drones, instead of installing base stations on the ground. It also includes scenarios such as high-altitude platform station (HAPS) and air to ground (ATG).

Physical Channel and General Signal Transmission

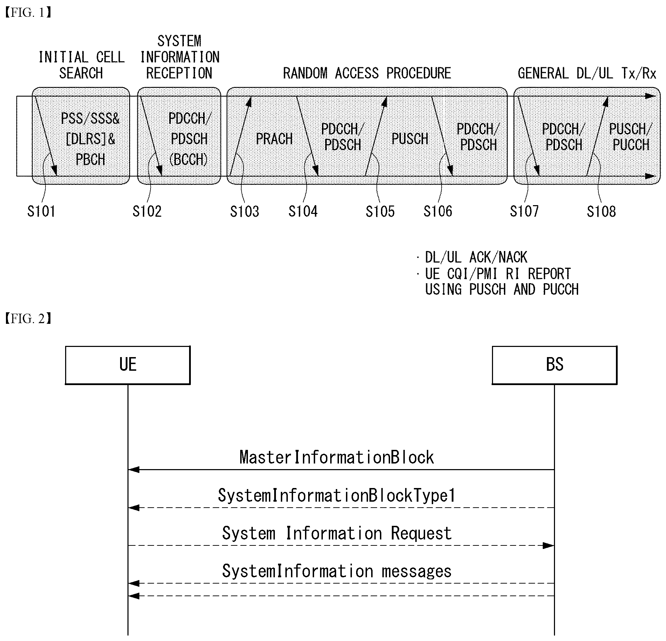

FIG. 1 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S101). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S102).

Meanwhile, when there is no radio resource first accessing the eNB or for signal transmission, the UE may perform a Random Access Procedure (RACH) to the eNB (S103 to S106). To this end, the UE may transmit a specific sequence to a preamble through a Physical Random Access Channel (PRACH) (S103 and S105) and receive a response message (Random Access Response (RAR) message) for the preamble through the PDCCH and a corresponding PDSCH. In the case of a contention based RACH, a Contention Resolution Procedure may be additionally performed (S106).

The UE that performs the above procedure may then perform PDCCH/PDSCH reception (S107) and Physical Uplink Shared Channel (PUSCH)/Physical Uplink Control Channel (PUCCH) transmission (S108) as a general uplink/-downlink signal transmission procedure. In particular, the UE may receive Downlink Control Information (DCI) through the PDCCH. Here, the DCI may include control information such as resource allocation information for the UE and formats may be differently applied according to a use purpose.

Meanwhile, the control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

Synchronization Signal Block (SSB) Transmission and Related Operation

FIG. 2 illustrates a procedure of acquiring system information (SI).

A UE may acquire AS-/NAS-information through an SI acquisition procedure. The SI acquisition procedure may be applied to a UE of RRC_IDLE state, RRC_INACTIVE state, and RRC_CONNECTED state.

SI is divided into a master information block (MIB) and a plurality of system information blocks (SIBs). SI other than the MIB may be referred to as remaining minimum system information (RMSI). This will be described in detail below.

- MIB includes information/parameters related to SIB1 (SystemInformationBlockType1) reception and is transmitted on PBCH of SSB. In the initial cell selection, the UE assumes that a half frame with the SSB is repeated with a periodicity of 20 ms. The UE may check whether a control resource set (CORESET) for a Type0-PDCCH common search space exists based on the MIB. The Type0-PDCCH common search space is a kind of PDCCH search space and is used to transmit a PDCCH for scheduling an SI message. If the Type0-PDCCH common search space exists, the UE may determine, based on information (e.g., pdcch-ConfigSIB1)) within the MIB, (i) a plurality of consecutive RBs and one or more consecutive symbols constituting the CORESET and (ii) a PDCCH occasion (i.e., a time domain location for PDCCH reception). If there is no Type0-PDCCH common search space, pdcch-ConfigSIB1 provides information for a frequency location where SSB/SIB1 exists and a frequency range where the SSB/SIB1 does not exist.
- The SIB1 contains information related to availability and scheduling (e.g., transmission periodicity, SI-window size) of the remaining SIBs (hereinafter, referred to as SIBx, where x is an integer of 2 or more). For example, the SIB1 may indicate whether the SIBx is periodically broadcasted or whether the SIBx is provided by a request of the UE by an on-demand scheme. If the SIBx is provided by the on-demand scheme, the SIB1 may include information that the UE requires to perform an SI request. The SIB1 is transmitted on the PDSCH, the PDCCH scheduling the SIB1 is transmitted through the Type0-PDCCH common search space, and the SIB1 is transmitted on the PDSCH indicated by the PDCCH.
- The SIBx is included in the SI message and is transmitted on the PDSCH. Each SI message is sent within a time window (i.e., SI-window) which periodically occurs.

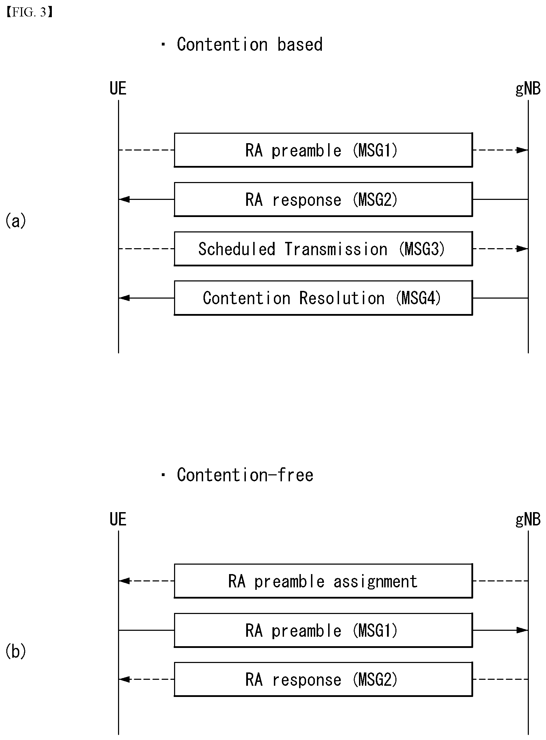

FIG. 3 illustrates a random access procedure.

(a) of FIG. 3 illustrates a contention based RACH procedure, and (b) of FIG. 3 illustrates a contention free RACH procedure.

MSG1 transmission is described below.

Subcarrier spacing for MSG1 is configured in an RACH configuration, and is provided in a handover command with respect to a contention-free RA procedure for handover.

Preamble indices for contention-based random access (CBRA) and contention-free random access (CFRA) are consecutively mapped to one SSB in one RACH transmission occasion.

- CBRA: Association between an SS block (SSB) within an SS burst set and a subset of RACH resources and/or preamble indices is configured by a parameter set in an RMSI.
- CFRA: A UE may be configured transmit multi-MSG1s through a dedicated multi-RACH transmission occasion in the time domain before the end of a monitored RAR window.

Furthermore, association between a CFRA preamble and an SSB is reconfigured through UE-specific RRC.

The random access procedure may be a Type-1 random access procedure (4-step RA) or a Type-2 random access procedure (2-step RA).

The Type-1 random access procedure may include transmission of random access preamble in a physical random access channel (PRACH) (Msg1), reception of a random access response (RAR) (Msg2), transmission of PUSCH scheduled by UL grant of the RAR (Msg3), and PDSCH for contention resolution (Msg4). If the random access procedure is contention free random access (CFRA), the Msg3 transmission and the Msg4 reception are omitted.

The Type-2 random access procedure may include transmission of random access preamble and PUSCH (MsgA) and RAR reception (MsgB).

Table 1 below shows operation related to the random access procedure.

[Table 1]

| |
|---|
| 8 Random access procedure<br><br>From the physical layer perspective, the Type-1 L1 random access procedure includes the transmission of random access preamble (Msg1) in a PRACH, random access response (RAR) message with a PDCCH/PDSCH (Msg2), and when applicable, the transmission of a PUSCH scheduled by a RAR UL grant, and PDSCH for contention resolution.<br><br>8.4 PDSCH with UE contention resolution identity<br><br>In response to a PUSCH transmission scheduled by a RAR UL grant when a UE has not been provided a C-RNTI, the UE attempts to detect a DCI format 1_0 with CRC scrambled by a corresponding TC-RNTI scheduling a PDSCH that includes a UE contention resolution identity [11, TS 38.321]. In response to the PDSCH reception with the UE contention resolution identity, the UE transmits HARQ-ACK information in a PUCCH. The PUCCH transmission is within a same active UL BWP as the PUSCH transmission. A minimum time between the last symbol of the PDSCH reception and the first symbol of the corresponding PUCCH transmission with the HARQ-ACK information is equal to $N_{T,1} + 0.5$ msec. $N_{T,1}$ is a time duration of $N_1$ symbols corresponding to a PDSCH processing time for UE processing capability 1 when additional PDSCH DM-RS is configured. For $\mu = 0$, the UE assumes $N_{1,0} = 14$ [6, TS 38.214]. |
| When detecting a DCI format in response to a PUSCH transmission scheduled by a RAR UL grant, as described in [11, TS 38.321], or corresponding PUSCH retransmission scheduled by a DCI format 0_0 with CRC scrambled by a TC-RNTI provided in the corresponding RAR message [11, TS 38.321], the UE may assume the PDCCH carrying the DCI format has the same DM-RS antenna port quasi co-location properties, as described in [6, TS 38.214], as for a SS/PBCH block the UE used for PRACH association, as described in clause 8.1, regardless of whether or not the UE is provided TCI-State for the CORESET where the UE receives the PDCCH with the DCI format. |

The configuration/definition/operation based on Table 1 above may be referenced to clarify the definition/operation of embodiments described later. For example, Msg4 HARQ-ACK may indicate HARQ-ACK information of Table 1.

The contents described above can be applied in combination with methods proposed in the present disclosure described later, or can be supplemented to clarify the technical features of methods proposed in the present disclosure.

If a UE in an initial access step successfully receives Msg. 4 PDSCH transmitted from a base station while performing a RACH procedure, the UE transmits HARQ-ACK information (see Table 1). In this instance, resources required for the UE to transmit PUCCH for Msg. 4 HARQ-ACK are predefined as initial PUCCH resource sets. The base station may select one of the defined initial PUCCH resource sets. Specifically, the base station may configure/indicate one of the initial PUCCH resource sets to the UE via RRC signaling. The base station indicates one PUCCH resource of the indicated PUCCH resource set to the UE. Specifically, the base station indicates, to the UE, the PUCCH resource based on a specific field of DCI for scheduling Msg. 4 PDSCH and an CCE index of the DCI. In this instance, the initial PUCCH resource set used is defined in Table 2 below.

【Table 2】

| | | | | | PRB offset $RB_{\text{BWP}}^{\text{offset}}$ | Set of initial |
|---|---|---|---|---|---|---|
| PUCCH resource sets before dedicated PUCCH resource configuration | | | | | | |
| Index | PUCCH format | First symbol | Number of symbols | | PRB offset $RB_{\text{BWP}}^{\text{offset}}$ | Set of initial CS indexes |
| 0 | 0 | 12 | 2 | | 0 | {0, 3} |
| 1 | 0 | 12 | 2 | | 0 | {0, 4, 8} |
| 2 | 0 | 12 | 2 | | 3 | {0, 4, 8} |
| 3 | 1 | 10 | 4 | | 0 | {0, 6} |
| 4 | 1 | 10 | 4 | | 0 | {0, 3, 6, 9} |
| 5 | 1 | 10 | 4 | | 2 | {0, 3, 6, 9} |
| 6 | 1 | 10 | 4 | | 4 | {0, 3, 6, 9} |
| 7 | 1 | 4 | 10 | | 0 | {0, 6} |
| 8 | 1 | 4 | 10 | | 0 | {0, 3, 6, 9} |
| 9 | 1 | 4 | 10 | | 2 | {0, 3, 6, 9} |
| 10 | 1 | 4 | 10 | | 4 | {0, 3, 6, 9} |
| 11 | 1 | 0 | 14 | | 0 | {0, 6} |
| 12 | 1 | 0 | 14 | | 0 | {0, 3, 6, 9} |
| 13 | 1 | 0 | 14 | | 2 | {0, 3, 6, 9} |
| 14 | 1 | 0 | 14 | | 4 | {0, 3, 6, 9} |
| 15 | 1 | 0 | 14 | | $\lfloor N_{\text{BWP}}^{\text{size}}/4 \rfloor$ | {0, 3, 6, 9} |

Signals/channels considered in the existing NR system may not operate properly because they do not satisfy a target SNR in a specific environment (e.g., NTN). In particular, PUCCH formats defined in the initial PUCCH resource set may require enhancement, such as repetition transmission, in an NTN environment. The present disclosure proposes methods to be considered when the repetition transmission is applied to the PUCCH format (defined in the initial PUCCH resource set).

Method of setting the number of repetition transmissions of initial PUCCH resource set

[Proposed Method 1]

A base station may configure/indicate a set of multiple (e.g., K) repetition numbers (applicable to initial PUCCH resource sets) to a UE via higher layer signaling (e.g., SIB, etc.). The base station may configure/indicate an actual repetition number to the UE through other indication methods (e.g., DCI, etc.). This proposed method is described in detail below.

The base station may configure, to the UE, a set of K repetition numbers, that the initial PUCCH resource sets can have, along with a parameter (e.g., pucch-ResourceCommon) determining an index of the initial PUCCH resource set via the higher layer signaling (e.g., SIB, etc.). Thereafter, the base station may configure/indicate, to the UE, the repetition number to be applied/used to the actual initial PUCCH resource set through a specific field (e.g., downlink assignment index (DAI) field) of DCI that schedules Msg. 4 PDSCH.

For example, in order to select one of the K repetition numbers, L ( $L = \lceil log_2 K \rceil$ ) bits of the DCI may be used to configure/indicate a PUCCH repetition number. For example, some of upper bit fields of a MCS field of the DCI may be used to configure/indicate the PUCCH repetition number.

For example, the repetition number to be used/applied for the initial PUCCH resource set may be configured/indicated based on the Msg. 4 PDSCH not the DCI scheduling the Msg. 4 PDSCH. In other words, the Msg. 4 PDSCH may include information on the repetition number.

For example, the repetition number to be used/applied for the initial PUCCH resource set may be configured/indicated to the UE via the DCI scheduling a PDSCH on which Msg. 2 RAR is forwarded or a PDSCH on which Msg. 2 RAR is forwarded.

In this instance, the repetition number (or the repetition transmission number) may be 2, 4, 6 or 8. That is, the K repetition numbers may include at least one of 2, 4, 6 and/or 8. For example, the K repetition numbers may be {2, 4, 8}.

The base station may configure/indicate, to the UE, candidates of a repetition transmission factor (or repetition factor) of PUCCH for Msg. 4 HARQ-ACK transmission via the higher layer signaling (e.g., SIB, etc.). For example, the base station may configure/indicate a plurality of candidates of {1, 2, 4, 8} to the UE based on SIB. The base station may indicate one of the configured/indicated candidates of the repetition factor to the UE via the specific DCI field (e.g., MCS field, downlink assignment index (DAI) field, HARQ process number (HPN) field, etc.).

The following embodiments may be considered to determine a size of a bit field for indicating the PUCCH repetition transmission factor (or repetition factor) within the DCI format.

According to an embodiment, the bit field size of the DCI for indicating the repetition factor may be pre-defined (e.g., 2 bits), regardless of the number of repetition factors configured to the UE. Specifically, regardless of how many of {1, 2, 4, 8} that the base station indicates via the higher layer signaling (e.g., SIB, etc.), 2 bits of a specific field may be always used to indicate the repetition factor of PUCCH for Msg. 4 HARQ-ACK transmission.

It may be assumed that the base station indicates two of {1, 2, 4, 8} to the UE via the higher layer signaling (e.g., SIB, etc.). The values configured/indicated by the base station may be {a1, a2}. a1 may be indicated with value of state 00 (or 10) of the corresponding 2-bit field, a2 may be indicated with value of state 01 (or 11) of the corresponding 2-bit field, and remaining states 10 and 11 (or 00 and 01) may be set as reserved states.

The present disclosure has described the value of the bit field of the DCI as 00 to 11, for convenience of explanation, but the value of the bit field of the DCI may be referred to as a codepoint. Specifically, a codepoint of the 2-bit field of the DCI may be '00', '01', '10' or '11'. Codepoints based on the 2-bit field of the DCI may '00', '01', '10' and '11'.

It may be assumed that the base station indicates three of {1, 2, 4, 8} to the UE via the higher layer signaling (e.g., SIB, etc.). The values configured/indicated by the base station may be {a1, a2, a3}. a1 may be indicated with value of state 00 (or 11) of the corresponding 2-bit field, a2 may be indicated with value of state 01 (or 10) of the corresponding 2-bit field, a3 may be indicated with value of state 10 (or 01) of the corresponding 2-bit field, and a remaining state 11 (or 00) may be set as a reserved state.

It may be assumed that the base station indicates four of {1, 2, 4, 8} to the UE via the higher layer signaling (e.g., SIB, etc.). The values configured/indicated by the base station may be {a1, a2, a3, a4}. a1 may be indicated with value of state 00 (or 11) of the corresponding 2-bit field, a2 may be indicated with value of state 01 (or 10) of the corresponding 2-bit field, a3 may be indicated with value of state 10 (or 01) of the corresponding 2-bit field, and a4 may be indicated with value of state 11 (or 00) of the corresponding 2-bit field.

According to an embodiment, a method may be considered to pre-define the PUCCH repetition factor corresponding to each state value of the 2-bit field as one of {1, 2, 4, 8}. For example, the repetition factor 1 may be indicated with state 00 (or 11), the repetition factor 2 may be indicated with state 01 (or 10), the repetition factor 4 may be indicated with state 10 (or 01), and the repetition factor 8 may be indicated with state 11 (or 00). Based on the above definition, the UE may expect that the base station will indicate only the state corresponding to each of the pre-configured/pre-indicated multiple repetition factors via the higher layer signaling (e.g., SIB, etc.). The UE may expect that the base station will not indicate the states not corresponding to the multiple repetition factors to the UE. That is, the UE may regard the corresponding state as the reserved states.

Based on the above-described embodiment, the UE may consider (expect) that the base station uses the MSB (or LSB) 2-bit field of the specific DCI field for PUCCH repetition transmission. The UE may consider (expect) that the remaining DCI field (i.e., the remaining bits excluding the 2-bit field) are used in the existing manner or for the existing operation. For example, when the MCS field is used, the UE may expect that the MSB (or LSB) 2 bits of the total 5-bit field will be used for the PUCCH repetition transmission. The UE may expect that the remaining 3-bit field will be used to indicate the lowest (or highest or selected some) of 8 indexes among indexes of the existing MCS table.

For another example, if a downlink assignment index (DAI) field is used, the UE may expect that all the MSB (or LSB) 2 bits of the total 2-bit field will be used for the PUCCH repetition transmission.

However, the proposed method always uses all the 2-bit field even though it can be indicated with a 1-bit field even when the base station indicates only 2 repetition factors of {1, 2, 4, 8} via the higher layer signaling. In relation to this, the following embodiment may be considered.

According to an embodiment, a method may be considered to vary the size of the field of the DCI used to indicate the repetition factors based on the number of repetition factors (i.e., candidates of the repetition factors) configured by the base station to the UE. This is described in detail below.

It may be considered a method in which the UE differently interprets the size of a specific DCI field for indicating the PUCCH repetition factor depending on how many of {1, 2, 4, 8} the base station indicates via the higher layer signaling (e.g., SIB, etc.).

In this instance, the size of the DCI field based on the above proposed method may be distinguished into a case where the base station configures two repetition factors (e.g., two of {1, 2, 4, 8}) via the higher layer signaling (e.g., SIB, etc.) and a case where the base station configures three or more repetition factors (e.g., three or four of {1, 2, 4, 8}).

First, the base station may configure/indicate, to the UE, two values of {1, 2, 4, 8} as candidate values of the repetition factor of PUCCH for Msg. 4 HARQ-ACK via the higher layer signaling (e.g., SIB, etc.). In this case, only 1 bit of the specific DCI field may be needed to indicate the actual number of repetition transmissions to the UE. Consequently, when two values of {1, 2, 4, 8} are configured, the base station may indicate the number of PUCCH repetition transmissions (repetition factors) to the UE using the MSB (or LSB) 1-bit field of the specific DCI field. The values configured/indicated by the base station via the higher layer signaling (e.g., SIB, etc.) may be {a1, a2} in the configured/indicated order (or ascending or descending order). a1 may be indicated using state 0 value (or 1) of the corresponding 1-bit field. a2 may be indicated using state 1 value (or 0) of the corresponding 1-bit field.

The UE may expect that the base station will use the MSB (or LSB) 1-bit field of the specific DCI field for PUCCH repetition transmission. The UE may expect that the remaining DCI field will be used in the existing manner or for the existing operation.

For example, if the MCS field is used, the UE may expect that the MSB (or LSB) 1 bit of the total 5-bit field will be used for the PUCCH repetition transmission. The UE may expect that the remaining 4-bit field will be used to indicate the lowest (or highest or selected some) of 16 indexes among indexes of the existing MCS table.

For another example, if the downlink assignment index (DAI) field is used, the UE may expect that the MSB (or LSB) 1 bit of the total 2-bit field will be used for the PUCCH repetition transmission. The UE may expect that the remaining 1-bit field will be used as reserved as before.

For another example, if a HARQ process number field is used, the UE may expect that the MSB (or LSB) 1 bit of the total 4-bit field will be used for the PUCCH repetition transmission. The UE may expect that the remaining 3-bit field will be used to indicate the lowest (or highest or selected some) of 8 indexes among the existing HARQ process number indexes.

Second, the base station may configure/indicate, to the UE, three or more values of {1, 2, 4, 8} as candidate values of the repetition factor of PUCCH for Msg. 4 HARQ-ACK via the higher layer signaling (e.g., SIB, etc.). In this case, 2 bits of the specific DCI field may be needed to indicate the actual number of repetition transmissions to the UE. Consequently, when three or four values of {1, 2, 4, 8} are configured, the base station may indicate the number of PUCCH repetition transmissions to the UE using the MSB (or LSB) 2-bit field of the specific DCI field. The values configured/indicated by the base station via the higher layer signaling (e.g., SIB, etc.) may be {a1, a2, a3} in the configured/indicated order (or ascending or descending order). a1 may be indicated using state 00 value (or 11) of the corresponding 2-bit field. a2 may be indicated using state 01 value (or 10) of the corresponding 2-bit field. a3 may be indicated using state 10 value (or 01) of the corresponding 2-bit field. State 11 value (or 00) of the corresponding 2-bit field may be set as a reserved state.

In addition, the values configured/indicated by the base station via the higher layer signaling (e.g., SIB, etc.) may be {a1, a2, a3, a4} in the configured/indicated order (or ascending or descending order). a1 may be indicated using state 00 value (or 11) of the corresponding 2-bit field. a2 may be indicated using state 01 value (or 10) of the corresponding 2-bit field. a3 may be indicated using state 10 value (or 01) of the corresponding 2-bit field. a4 may be indicated using state 11 value (or 00) of the corresponding 2-bit field.

The UE may expect that the base station will use the MSB (or LSB) 2-bit field of the specific DCI field for PUCCH repetition transmission (in the same manner as defined in the embodiment where the size of the DCI field for indicating the repetition factor is always fixed to 2 bits). The UE may expect that the remaining DCI field will be used in the existing manner or for the existing operation.

For example, if the MCS field is used, the UE may expect that the MSB (or LSB) 2 bits of the total 5-bit field will be used for the PUCCH repetition transmission. The UE may expect that the remaining 3-bit field will be used to indicate the lowest (or highest or selected some) of 8 indexes among indexes of the existing MCS table.

For another example, if the downlink assignment index (DAI) field is used, the UE may expect that all the MSB (or LSB) 2 bits of the total 2-bit field will be used for the PUCCH repetition transmission.

For another example, if the HARQ process number field is used, the UE may expect that the MSB (or LSB) 2 bits of the total 4-bit field will be used for the PUCCH repetition transmission. The UE may expect that the remaining 2-bit field will be used to indicate the lowest (or highest or selected some) of 4 indexes among the existing HARQ process number indexes.

[Proposed Method 2]

A specific repetition number value may be added to an initial PUCCH resource set table. Or, multiple specific repetition number sets may be pre-defined/pre-configured. Afterwards, a base station may configure/indicate an actual repetition number to a UE via higher layer signaling (e.g., SIB, etc.) or other indication methods (e.g., DCI, etc.). This is described in detail below.

The base station may pre-configure, to the UE, K repetition number sets for each PUCCH resource set index (or per rPUCCH) in the initial PUCCH resource set table. The base station may configure one of the K repetition number sets via the higher layer signaling (e.g., SIB, etc.). Or, the base station may configure one of the K repetition number sets based on Msg. 2/4 PDSCH and/or DCI scheduling Msg. 2/4 PDSCH, etc.

Alternatively, another method of fixing a specific repetition number for each PUCCH resource set index (or per rPUCCH) in the initial PUCCH resource set table. may be considered. The present embodiment may be performed based on an existing table or a newly introduced table. For example, the configuration according to the present embodiment may be performed by reusing the existing table. For example, the configuration according to the present embodiment may be performed based on a newly introduced table for repetition. In the new table, different repetition numbers may be mapped to the same PUCCH format.

In this instance, the repetition number (or repetition transmission number) may be 2, 4, 6 or 8. That is, K repetition numbers may include at least one of 2, 4, 6 and/or 8. For example, the K repetition numbers may be {2, 4, 8}.

[Proposed Method 3]

One or multiple repetition numbers may be pre-configured/pre-indicated on an NTN platform type (or satellite type, or satellite altitude, or UE type). This is described in detail below.

Due to characteristics of an NTN system, there may be a difference in the performance of UL signal/channel depending on an NTN satellite type (or satellite altitude, etc.). Considering this, the repetition number (or repetition number set) to be used/applied for the initial PUCCH resource set may be pre-configured/pre-determined/pre-defined based on the NTN satellite type/altitude and/or the UE type, etc.

For example, if the repetition number is determined based on the NTN satellite type, a different repetition number (or repetition number set) may be pre-configured/pre-determined/pre-defined to be used based on Geo-stationary Earth Orbit (GEO), Medium Earth Orbit (MEO), Low Earth Orbit (LEO), etc. Thereafter, the UE may receive satellite orbit information to find out the NTN type. Through this, the repetition number of the initial PUCCH resource set may be determined.

Or, the UE may receive satellite orbit information to find out the NTN type. Through this, the repetition number set of the initial PUCCH resource set may be determined. Thereafter, the base station may configure/indicate the actual repetition number to the UE through other indication methods (e.g., DCI, etc.).

[Proposed Method 4]

Repetition transmission request resources and repetition transmission number for PUCCH for Msg. 4 HARQ-ACK may be configured in conjunction with repetition transmission request resources and repetition transmission number of Msg. 3 PUSCH. This is described in detail below.

If repetition transmission is required for the PUCCH for Msg. 4 HARQ-ACK from a UE perspective, repetition transmission for the Msg. 3 PUSCH is also likely to be required. Therefore, a method similar to a triggering method of Msg. 3 PUSCH repetition introduced in Rel-17 NR CE may also be introduced for triggering PUCCH for Msg. 4 HARQ-ACK repetition transmission.

A UE that intends to request the Msg. 3 PUSCH repetition may operate as follows. The UE may select and transmit a preamble index of one of resources allocated by a base station among existing RACH preamble resources so that the base station can pre-request the Msg. 3 PUSCH repetition. Through this, the UE may inform the base station that the Msg. 3 PUSCH repetition is required.

A similar method to this may be applied to the repetition transmission of the PUCCH for Msg. 4 HARQ-ACK. The UE may select and transmit one of resources allocated by the base station among the existing RACH preamble resources so that the base station can pre-request the Msg. 3 PUSCH repetition. Through this, the UE may inform the base station that the repetition transmission of the PUCCH for Msg. 4 HARQ-ACK is required.

Alternatively, the base station may allocate/configure new resources to the UE among the existing RACH preamble resources so that the UE can request the repetition transmission of the PUCCH for Msg. 4 HARQ-ACK. The UE may transmit a RACH preamble based on one of the configured resources. Through this, the UE may inform the base station that the repetition transmission of the PUCCH for Msg. 4 HARQ-ACK is required.

For example, because there may be many situations where the UE simultaneously requires the Msg. 3 PUSCH repetition transmission and the PUCCH for Msg. 4 HARQ-ACK repetition transmission, the following embodiment may be considered. A RACH preamble resource for a request for the repetition transmission of the PUCCH for Msg. 4 HARQ-ACK, which may be newly defined, may be configured to be the same as or included in a RACH preamble resource allocated for a request for the Msg. 3 PUSCH repetition.

For example, the following embodiment may be considered to increase the freedom of RACH preamble resource allocation of the base station. The RACH preamble resource for the request for the repetition transmission of the PUCCH for Msg. 4 HARQ-ACK, which may be newly defined, may be configured independently regardless of the RACH preamble resource allocated for the request for the Msg. 3 PUSCH repetition.

If the UE selects a specific preamble index indicating that the repetition transmission of the PUCCH for Msg. 4 HARQ-ACK is required (i.e., if the UE selects one of the pre-configured RACH preamble resources), the following operation may be performed.

When the UE receives a specific DCI (e.g., DCI for scheduling Msg. 4 PDSCH, or DCI for scheduling Msg. 2 RAR) and interprets a corresponding field, the UE may expect that a specific field (e.g., PUCCH repetition indicator field) will be included and transmitted. Examples of the specific DCI field may include an MCS field, a TDRA field, or the like.

Additionally, the base station may configure/indicate via higher layer signaling (e.g., SIB, etc.) by paring a repetition number value of the PUCCH for Msg. 4 HARQ-ACK to an existing Msg. 3 PUSCH repetition number value.

That is, for example, the base station may configure/indicate, to the UE, K (e.g., K=4) combinations including Msg. 3 PUSCH repetition number value X and repetition number value Y of the PUCCH for Msg. 4 HARQ-ACK via the higher layer signaling (e.g., SIB, etc.). For example, if K=4, repetition number (X, Y) configured to the UE may be {(x1, y1), (x2, y2), (x3, y3), (x4, y4)}. Thereafter, the UE may be indicated with a specific value X by the base station via Msg. 2 RAR or via upper 2-bit of a specific field (e.g., MCS field) of DCI (e.g., DCI format 0_0) for scheduling Msg. 2 RAR. The value X may be applied to the repetition transmission of Msg. 3 PUSCH, and the value Y pared to the value X may be applied to the repetition transmission of the PUCCH for Msg. 4 HARQ-ACK.

For example, it may be assumed that the values X and Y are set/indicated to an integer greater than 1, and the UE selects and transmits one of predefined preamble resources to request the Msg. 3 PUSCH repetition transmission. That is, this is a case where the UE requests together both the Msg. 3 PUSCH repetition transmission and the repetition transmission of the PUCCH for Msg. 4 HARQ-ACK. The above-described embodiment may be preferably used when both the Msg. 3 PUSCH repetition transmission and the repetition transmission of the PUCCH for Msg. 4 HARQ-ACK are requested together.

Additionally, it may be assumed that the repetition value of the PUCCH for Msg. 4 HARQ-ACK that may be configured/indicated by the base station via the higher layer signaling (e.g., SIB, etc.) is set to 3, 2, etc. not 4. Even in this case, an operation of paring (or mapping) with four Msg. 3 PUSCH repetition number values may be required. This may be summarized as follows. In methods proposed below, it was assumed that the values of repetition numbers are set so that the minimum value is first indicated and the maximum value is indicated later (e.g., a1<a2<a3<a4, b1<b2<b3<b4).

The repetition number of the PUCCH for Msg. 4 HARQ-ACK may be set to three or less via the higher layer signaling (e.g., SIB, etc.). For example, three or less repetition numbers may be configured/indicated to the UE by the base station.

The configured/indicated values of the repetition number of the PUCCH for Msg. 4 HARQ-ACK and the four Msg. 3 PUSCH repetition numbers may be pared based on the following order/rule.

A. Option 1) It is configured to pare one by one from a minimum (or maximum) value and reuse the maximum (or minimum) value for a remaining space.

i. For example, a method of paring one by one from a minimum value and reusing a maximum value for a remaining space may be considered. The Msg. 3 PUSCH repetition number may be A = {a1, a2, a3, a4}, and the Msg. 4 HARQ-ACK PUCCH repetition number may be B = {b1, b2, b3}. Msg. 3 PUSCH repetition number indicator field value may be set to {00, 01, 10, 11} = {(a1, b1), (a2, b2), (a3, b3), (a4, b3)}.

ii. For another example, a method of paring one by one from a maximum value (in reverse order) and reusing a minimum value for a remaining space may be considered. The Msg. 3 PUSCH repetition number may be A = {a1, a2, a3, a4}, and the Msg. 4 HARQ-ACK PUCCH repetition number may be B = {b1, b2}. The Msg. 3 PUSCH repetition number indicator field value may be set to {00, 01, 10, 11} = {(a1, b1), (a2, b1), (a3, b1), (a4, b2)}.

B. Option 1a) (the same result as the option 1, but expressed differently) it is configured to pare one by one from a minimum (or maximum) value, and if a state that is not pared is indicated, a UE is configured to understand that it has been indicated with the maximum (or minimum) value.

i. For example, a method of paring one by one from a minimum value and in which the UE considers that a maximum value has been indicated to a remaining space without paring the remaining space may be considered. The Msg. 3 PUSCH repetition number may be A = {a1, a2, a3, a4}, and the Msg. 4 HARQ-ACK PUCCH repetition number may be B = {b1, b2, b3}. The Msg. 3 PUSCH repetition number indicator field value may be set to {00, 01, 10, 11} = {(a1, b1), (a2, b2), (a3, b3), (a4, -)}. If the Msg. 3 PUSCH repetition number indicator field is indicated with "11", the UE may determine that the Msg. 4 HARQ-ACK PUCCH repetition number has been indicated with b3.

ii. For another example, a method of paring one by one from a maximum value (in reverse order) and in which the UE understands that a minimum value has been indicated to a remaining space without paring the remaining space may be considered. The Msg. 3 PUSCH repetition number may be A = {a1, a2, a3, a4}, and the Msg. 4 HARQ-ACK PUCCH repetition number may be B = {b1, b2}. The Msg. 3 PUSCH repetition number indicator field value may be set to {00, 01, 10, 11} = {(a1, -), (a2, -), (a3, b1), (a4, b2)}.

If the Msg. 3 PUSCH repetition number indicator field is indicated with "00" or "01", the UE may determine that the Msg. 4 HARQ-ACK PUCCH repetition number has been indicated with b1.

C. Option 2) It is configured to pare minimum and maximum values to a minimum value and/or a maximum value among Msg. 3 PUSCH repetition numbers and reuse a middle value for a remaining space.

    i. For example, the Msg. 3 PUSCH repetition number may be A = {a1, a2, a3, a4}, and the Msg. 4 HARQ-ACK PUCCH repetition number may be B = {b1, b2, b3}. The Msg. 3 PUSCH repetition number indicator field value may be set to {00, 01, 10, 11} = {(a1, b1), (a2, b2), (a3, b2), (a4, b3)}.

D. Option 3) (If two PUCCH repetition numbers are transmitted) it is configured to pare the Msg. 3 PUSCH repetition number and the Msg. 4 HARQ-ACK PUCCH repetition number in a ratio of 2:1, starting from a minimum value (or maximum value).

    i. For example, the Msg. 3 PUSCH repetition number may be A = {a1, a2, a3, a4}, and the Msg. 4 HARQ-ACK PUCCH repetition number may be B = {b1, b2}. The Msg. 3 PUSCH repetition number indicator field value may be set to {00, 01, 10, 11} = {(a1, b1), (a2, b1), (a3, b2), (a4, b2)}.

E. Option 4) Method of directly configuring/indicating, by the base station, whether a specific Msg. 3 PUCCH repetition number value and a specific Msg. 4 HARQ-ACK PUCCH repetition number value are pared, via the higher layer signaling (e.g., SIB, etc.)

    i. For example, the Msg. 3 PUSCH repetition number may be A = {a1, a2, a3, a4}, and the Msg. 4 HARQ-ACK PUCCH repetition number may be B = {b1, b2}. The Msg. 3 PUSCH repetition number indicator field value may be indicated as in 1 and 2 below.

        1. {00, 01, 10, 11} = {(a1, b1), (a2, b1), (a3, b2), (a4, b2)}
        2. {00, 01, 10, 11} = {(a1, b1), (a2, b1), (a3, b1), (a4, b2)}

F. Option 5) Method of pre-defining a plurality of candidates that define how to pare Msg. 3 PUSCH repetition number and Msg. 4 HARQ-ACK PUCCH repetition number and indicating, by a base station, one of the plurality of candidates via higher layer signaling (e.g., SIB, etc.)

G. The Msg. 3 PUSCH repetition number and/or the Msg. 4 HARQ-ACK PUCCH repetition number used in the above proposed methods may be a positive integer including 1.

    i. That is, the Msg. 3 PUSCH repetition number may be {1, 2, 3, 4, 7, 8, 12, 16}, etc., and the Msg. 4 HARQ-ACK PUCCH repetition number may be {1, 2, 4, 8}, etc.

    ii. Consequently, single transmission of the Msg. 3 PUSCH and repetition transmission of the Msg. 4 HARQ-ACK PUCCH may be pared, and on the contrary, repetition transmission of the Msg. 3 PUSCH and single transmission of the Msg. 4 HARQ-ACK PUCCH may be pared. The single transmission of the Msg. 3 PUSCH and the single transmission of the Msg. 4 HARQ-ACK PUCCH may be pared.

In another method, a set of Msg. 4 HARQ-ACK PUCCH repetition numbers may be determined based on the Msg. 3 PUSCH repetition number value indicated to the UE. Specifically, the base station may configure/indicate {A, B, C, D} as the Msg. 3 PUSCH repetition number value to the UE. And, the base station may configure/indicate {a, b, c, d} as the Msg. 4 HARQ-ACK PUCCH repetition number value to the UE. In this case, if the base station indicates "A" as the Msg. 3 PUSCH repetition number value to the UE, a set of Msg. 4 HARQ-ACK PUCCH repetition numbers for the UE may be determined as {a, b}. On the other hand, if the base station indicates "B" as the Msg. 3 PUSCH repetition number value to the UE, a set of Msg. 4 HARQ-ACK PUCCH repetition numbers for the UE may be determined as {c, d}. In such a case, the UE may monitor DCI format 0_1, expecting that the base station will dynamically indicate the Msg. 4 HARQ-ACK PUCCH repetition number to the UE using a 1-bit field.

The proposed method described above is a method of implicitly mapping the Msg. 3 PUSCH repetition number and the Msg. 4 HARQ-ACK PUCCH repetition number. Additionally, it may be considered to similarly apply the proposed method described above to a PRACH repetition number and the Msg. 4 HARQ-ACK PUCCH repetition number.

In a specific proposed method, the Msg. 4 HARQ-ACK PUCCH repetition number or a set of Msg. 4 HARQ-ACK PUCCH repetition numbers may be determined based on a PRACH repetition number value selected by the UE.

Specifically, the base station may configure/indicate one or multiple PRACH repetition numbers via the higher layer signaling. In this instance, if the UE has a PRACH repetition feature and intends to perform the repetition transmission, the appropriate PRACH repetition number may be selected based on an RSRP level of the UE. In addition, if the UE has a Msg. 4 HARQ-ACK PUCCH repetition feature and intends to perform the repetition transmission, the Msg. 4 HARQ-ACK PUCCH repetition number or the set of Msg. 4 HARQ-ACK PUCCH repetition numbers may be determined by the PRACH repetition number value pre-selected by the UE.

For example, it may be assumed that the PRACH repetition number configured by the base station is A and B (e.g., A<B), and the Msg. 4 HARQ-ACK PUCCH repetition number configured by the base station is a and b (e.g., a<b). If the UE selects the PRACH repetition number 'A', the Msg. 4 HARQ-ACK PUCCH repetition number may be configured with 'a'. If the UE selects the PRACH repetition number 'B', the Msg. 4 HARQ-ACK PUCCH repetition number may be configured with 'b'. In such a case, the UE may monitor DCI format 0_1, expecting that the base station will not dynamically indicate the Msg. 4 HARQ-ACK PUCCH repetition number.

For another example, it may be assumed that the PRACH repetition number configured by the base station is A and B (e.g., A<B), and the Msg. 4 HARQ-ACK PUCCH repetition number configured by the base station is a, b, c and d (e.g., a<b<c<d). If the UE selects the PRACH repetition number 'A', a set of the Msg. 4 HARQ-ACK PUCCH repetition numbers may be configured with {a, b}. If the UE selects the PRACH repetition number 'B', a set of the Msg. 4 HARQ-ACK PUCCH repetition numbers may be configured with {c, d}. In such a case, the UE may monitor DCI format 0_1, expecting that the base station will dynamically indicate the Msg. 4 HARQ-ACK PUCCH repetition number to the UE using a 1-bit field.

For another example, it may be assumed that the PRACH repetition number configured by the base station is A and B (e.g., A<B), and the Msg. 4 HARQ-ACK PUCCH repetition number configured by the base station is a, b, c and d (e.g., a<b<c<d). If the UE selects the PRACH repetition number 'A', the Msg. 4 HARQ-ACK PUCCH repetition number may be configured with 'a'. If the UE selects the PRACH repetition number 'B', a set of the Msg. 4 HARQ-ACK PUCCH repetition numbers may be configured with {b, c, d}. In such a case, when the UE has selected the PRACH repetition number 'A', the UE may monitor DCI format 0_1, expecting that the base station will not dynamically indicate the Msg. 4 HARQ-ACK PUCCH repetition number. On the other hand, when the UE has selected the PRACH repetition number 'B', the UE may monitor DCI format 0_1, expecting that the base station will dynamically indicate the Msg. 4 HARQ-ACK PUCCH repetition number to the UE using a 2-bit field.

Additionally, a method of implicitly paring the PRACH repetition number and/or the Msg. 3 PUSCH repetition number and/or the Msg. 4 HARQ-ACK PUCCH repetition number may be considered. For example, the Msg. 3 PUSCH repetition number set may be implicitly determined by the PRACH repetition number value selected by the UE, and the Msg. 4 HARQ-ACK PUCCH repetition number may be implicitly determined through the Msg. 3 PUSCH repetition number value indicated by the base station.

The above operations may be applied when a specific UE has the Msg. 4 HARQ-ACK PUCCH repetition feature and intends to perform the repetition transmission, and at the same time, has the Msg. 3 PUSCH repetition feature and/or the PRACH repetition feature and intends to perform the repetition transmission. If the specific UE has only the Msg. 4 HARQ-ACK PUCCH repetition feature and only the corresponding feature is used to perform the repetition transmission, the UE may operate independently regardless of the PRACH repetition number and/or the Msg. 3 PUSCH repetition number configured by the base station. That is, if the base station configures/indicates multiple Msg. 4 HARQ-ACK PUCCH repetitions, the UE may be configured to monitor DCI format 0_1, expecting that the base station will dynamically indicate the Msg. 4 HARQ-ACK PUCCH repetition number to the UE using N-bit field (where N=1 or 2). If the base station configures/indicates one Msg. 4 HARQ-ACK PUCCH repetition, the UE may be configured to monitor DCI format 0_1, expecting that the base station will not dynamically indicate the Msg. 4 HARQ-ACK PUCCH repetition number.

[Proposed Method 5]

A method of providing one repetition number that can be provided to initial PUCCH resource sets via higher layer signaling (e.g., SIB, etc.) and a method of providing multiple repetition number sets and then configuring/indicating a repetition number through other indication methods (e.g., DCI, etc.) may be supported at the same time. Embodiments that can be applied in such cases are described in detail below.

i) A method of configuring/indicating one cell-specific PUCCH repetition number via higher layer signaling (e.g., SIB, etc.) and ii) a method of providing multiple repetition number sets and then dynamically configuring/indicating a PUCCH repetition number through other indication methods (e.g., DCI, etc.) may be supported at the same time. In this case, a UE may operate based on one of the following options.

(Option 1) A base station may configure one cell-specific PUCCH repetition number to the UE via the higher layer signaling (e.g., SIB, etc.). The UE may understand and operate that only one PUCCH repetition number is always cell-specifically supported in a corresponding cell. Characteristically, in this case, other parameters related to a PUCCH repetition factor may be configured to be ignored. As a result, the UE may expect that the PUCCH repetition (repetition number/factor) will not be dynamically indicated. The UE may interpret a specific (DCI) field, which is defined to be able to dynamically indicate the PUCCH repetition, in the same manner as an existing operation where repetition was not supported.

Alternatively, the base station may configure/provide multiple repetition number sets to the UE. The UE may understand and operate that the repetition number will always be dynamically indicated in a corresponding cell. Characteristically, even in this case, the UE may be configured to ignore other parameters related to a PUCCH repetition factor. As a result, the UE may expect that the PUCCH repetition (i.e., repetition number) will be dynamically indicated. The UE may understand a specific (DCI) field, which is defined to be able to dynamically indicate the PUCCH repetition, as supporting the repetition and determine the repetition number (repetition factor).

Alternatively, the UE may expect that an operation for the base station to configure one cell-specific PUCCH repetition number via the higher layer signaling (e.g., SIB, etc.) and an operation for the base station to provide multiple repetition number sets do not occur at the same time. That is, when the base station indicates the cell-specific PUCCH repetition number through a higher layer parameter, the base station may not indicate a parameter that provides the multiple repetition number sets. Or, on the contrary, when the base station indicates multiple repetition number sets through the higher layer parameter, the base station may not indicate a parameter indicating the cell-specific PUCCH repetition number.

(Option 2) The base station may configure one cell-specific PUCCH repetition number to the UE via the higher layer signaling (e.g., SIB, etc.). The UE may interpret/determine the value as some of values that can be dynamically indicated. That is, a cell-specifically indicated value may be overridden by a dynamically indicated value.

For example, the one cell-specific PUCCH repetition number may be set to a maximum value among the values that can be dynamically indicated. That is, if the value of N is cell-specifically indicated, a repetition factor that can be dynamically indicated may be M values that are less than or equal to N (e.g., if M is 4, it may be N, N-1, N-2, N-3 or N, N/2, N/4, N/8, etc.). Thereafter, the base station may configure/indicate an actual repetition number to the UE through other indication methods (e.g., DCI, etc.). In this instance, the UE may expect that the repetition factor will be indicated through a specific (DCI) field, which is defined to be able to dynamically indicate PUCCH repetition. Thereafter, if a specific repetition factor is indicated from the base station, the UE may perform the PUCCH repetition based on this.

For another example, the one cell-specific PUCCH repetition number may be set to a minimum value, excluding 1, among the values that can be dynamically indicated. That is, if the value of N is cell-specifically indicated, a repetition factor that can be dynamically indicated may be a total of M values including 1 and (M-1) values that are greater than or equal to N (e.g., if M is 4, it may be 1, N, N+1, N+2 or 1, N, 2*N, 4*N, etc.), and the total of M values may be configured/indicated to the UE. Thereafter, the base station may configure/indicate an actual repetition number to the UE through other indication methods (e.g., DCI, etc.). In this instance, the UE may expect that the repetition factor will be indicated through a specific (DCI) field, which is defined to be able to dynamically indicate PUCCH repetition. Thereafter, if a specific repetition factor is indicated from the base station, the UE may perform the PUCCH repetition based on this.

(Option 3) The base station may configure/indicate one cell-specific PUCCH repetition number to the UE via the higher layer signaling (e.g., SIB, etc.). Additionally, it may be considered a situation where a set of PUCCH repetition numbers, that the base station dynamically configures/indicates later via the higher layer signaling (e.g., SIB, etc.), is configured/indicated to the UE. Characteristically, the cell-specific PUCCH repetition number value configured/indicated by the base station and the PUCCH repetition number values dynamically configured/indicated later by the base station may be set independently of each other. Thereafter, the operation of the UE may be indicated by the base station through a specific (DCI) 1-bit field. Specifically, the base station may inform, through the specific (DCI) 1-bit field, whether the UE uses the cell-specific PUCCH repetition number or is dynamically configured/indicated with one of the pre-configured multiple PUCCH repetition number values and uses the value.

For example, MSB 1 bit may be used among the MCS field of DCI format 0_1 for scheduling Msg4 PDSCH. Based on the MSB 1 bit, the base station may indicate, to the UE, whether the UE uses the cell-specific PUCCH repetition number or is dynamically configured/indicated with one of the pre-configured multiple PUCCH repetition number values and uses the value. If the base station indicates the UE to use the cell-specific PUCCH repetition number, the base station may configure/indicate the MCS value to the UE through the remaining 4-bit MCS field. If the base station indicates the UE to be dynamically configured/indicated with one of the pre-configured multiple PUCCH repetition number values and use the value, the base station may configure/indicate an actual repetition number to the UE using the next MSB L bit (excluding the previously used MSB 1 bit) (e.g., if the base station pre-configures a total of K repetition numbers, L bit ( $L = \lceil log_2 K \rceil$ ) is used). The base station may configure/indicate the MCS value to the UE through the remaining 5-1-L bit MCS field.

(Option 4) It may be considered a situation where the base station indicates one cell-specific PUCCH repetition number to the UE via the higher layer signaling (e.g., SIB, etc.). Additionally, the base station may configure whether or not to indicate a set of PUCCH repetition numbers, that the base station dynamically configures/indicates later via the higher layer signaling (e.g., SIB, etc.). If the base station does not indicate the set of PUCCH repetition numbers, which are dynamically configured/indicated later by the base station, to the UE, the UE may perform the operation of the Option 1 or the Option 2. On the other and, if the base station indicates the set of PUCCH repetition numbers, which are dynamically configured/indicated later by the base station, to the UE, the UE may perform the operation of the Option 1 or the Option 3.

Method of correcting/adding an initial PUCCH resource set table

PUCCH format 1, which occupies 14 OFDM symbols in an existing initial PUCCH resource set table, is being considered for repetition transmission for coverage enhancement. That is, since a total of 5 indexes from index 11 to index 15 in Table 2 are resources considered for repetition transmission, the following methods may be additionally considered.

[Proposed Method A]

Method in which the UE expects that if PUCCH for Msg. 4 HARQ-ACK repetition transmission is considered, a parameter (e.g., pucch-ResourceCommon) determining an index of an initial PUCCH resource set via SIB is indicated with one of 11, 12, 13, 14, and (15)

The following embodiments may be considered in at least one of i) a case where the UE requests the PUCCH for Msg. 4 HARQ-ACK repetition transmission, ii) a case where the UE reports UE capability for PUCCH for Msg. 4 HARQ-ACK repetition transmission to the base station, and/or iii) a case where the base station configures/indicates a repetition transmission number of PUCCH for Msg. 4 HARQ-ACK via the higher layer signaling (e.g., SIB, etc.).

The UE may expect that the base station will configure/indicate one of the indexes consisting of PUCCH format 1 occupying 14 OFDM symbols. That is, the UE may expect that one of 11, 12, 13, 14, and 15 will be configured/indicated as the parameter (e.g., pucch-ResourceCommon) value that determines the index of the initial PUCCH resource set via the SIB. Or, the UE may expect that a value less than or equal to 10 will not be set/indicated as the value of the parameter. Or, the UE may expect that one of 11, 12, 13, and 14 will be set/indicated as the value of the parameter. Or, the UE may expect that a value less than or equal to 10 among the numbers excluding 15 will not be set/indicated as the value of the parameter.

[Proposed Method B]

Method of additionally introducing a new table for PUCCH for Msg. 4 HARQ-ACK repetition transmission

Since there are 5 indices (11, 12, 13, 14, and 15) consisting of PUCCH format 1 occupying 14 OFDM symbols in the existing table, Table 2, it may be considered to add a new table for PUCCH for Msg. 4 HARQ-ACK repetition transmission by adding M indexes. As above, if the new table for repetition transmission is added, the following operation may be performed. The base station may configure/indicate, to the UE, via higher layer signaling (e.g., SIB, etc.), whether to use the existing table (i.e., Table 2) that does not consider the repetition transmission or to use the new table that considers the repetition transmission. The UE may decide whether to use the existing table or the new table and determine which table to refer to.

Alternatively, the UE may determine whether to refer to the existing table or the new table by referring to other parameter values. The table to be referred to by the UE may be pre-defined. For example, if a new table for repetition transmission is newly defined separately from the existing table, and if a repetition number set for PUCCH for Msg. 4 HARQ-ACK is provided via the higher layer signaling (e.g., SIB, etc.) (or a repetition number of the PUCCH for Msg. 4 HARQ-ACK pared with a repetition number of Msg. 3 PUSCH is provided, or if the UE requests repetition transmission of the PUCCH for Msg. 4 HARQ-ACK), the UE may expect that the base station will configure/indicate an initial PUCCH resource set index using the new table.

For another example, if the repetition number set for the PUCCH for Msg. 4 HARQ-ACK is not provided via the higher layer signaling (e.g., SIB, etc.) even when a new table for repetition transmission has been newly defined separately from the existing table (or if the repetition number of the PUCCH for Msg. 4 HARQ-ACK pared with the repetition number of Msg. 3 PUSCH is not provided, or if the UE does not request repetition transmission of the PUCCH for Msg. 4 HARQ-ACK), the UE may expect that the base station will configure/indicate an initial PUCCH resource set index using the existing table. The UE may determine that the repetition transmission for the PUCCH for Msg. 4 HARQ-ACK will not be configured/indicated.

Basically, the following operation/configuration may be considered for initial PUCCH resource set indexes that may be newly introduced in that it is preferable that PUCCH format 1 occupying 14 OFDM symbols is maintained as it is. A first symbol may be always fixed to 0. Additionally, new indexes may be defined by adding a PRB offset value, a set of initial CS indexes, or a repetition number value. For specific examples, new indexes may be expressed as the following options.

[Option 1]

Method of constructing a new table with a total of eight indexes by adding three new indexes to indexes 11, 12, 13, 14, and 15 of the existing table (i.e., 3-bit indication)

Adding three new indexes as shown in Table 3 or Table 4 below may be considered. A total of eight indexes are configured, and the base station may configure/indicate one of the eight indexes to the UE through a 3-bit field of the SIB (1-bit field reduction compared to the existing operation). That is, a PUCCH format, a first symbol, and the number of symbols may be fixed to 1, 0, and 14, respectively, and a new index may be defined through a combination of a PRB offset and a set of initial CS indexes. It is possible to consider a combination of PUCCH format 1 and CS {0, 4, 8}, which is a combination that is not in the existing table, or it is also possible to consider adding a new value such as PRB offset 4 or 8 for CS {0, 6}.

The method described above may be applied in the same manner as the method of configuring/indicating the repetition number or the repetition number set via the higher layer signaling proposed in relation to the embodiment related to the number of repetition transmissions of the initial PUCCH resource set described above.

【Table 3】

| Table 1: PUCCH resource sets before dedicated PUCCH resource configuration | | | | | |
|---|---|---|---|---|---|
| Index | PUCCH format | First symbol | Number of symbols | PRB offset $RB_{\mathrm{BWP}}^{\mathrm{offset}}$ | Set of initial CS indexes |
| 0 | 1 | 0 | 14 | 0 | {0, 6} |
| **1** | **1** | **0** | **14** | **0** | **{0, 4, 8}** |
| **2** | **1** | **0** | **14** | **3** | **{0, 4, 8}** |
| **3** | **1** | **0** | **14** | **6** | **{0, 4, 8}** |
| 4 | 1 | 0 | 14 | 0 | {0, 3, 6, 9} |
| 5 | 1 | 0 | 14 | 2 | {0, 3, 6, 9} |
| 6 | 1 | 0 | 14 | 4 | {0, 3, 6, 9} |
| 7 | 1 | 0 | 14 | $\lfloor N_{\mathrm{BWP}}^{\mathrm{size}}/4 \rfloor$ | {0, 3, 6, 9} |

Referring to Table 3, newly proposed items based on this embodiment are Indexes 1, 2, and 3.

【Table 4】

| Table 2: PUCCH resource sets before dedicated PUCCH resource configuration | | | | | |
|---|---|---|---|---|---|
| Index | PUCCH format | First symbol | Number of symbols | PRB offset $RB_{\mathrm{BWP}}^{\mathrm{offset}}$ | Set of initial CS indexes |
| 0 | 1 | 0 | 14 | 0 | {0, 6} |
| **1** | **1** | **0** | **14** | **4** | **{0, 6}** |
| **2** | **1** | **0** | **14** | **8** | **{0, 6}** |
| 3 | 1 | 0 | 14 | 0 | {0, 3, 6, 9} |
| 4 | 1 | 0 | 14 | 2 | {0, 3, 6, 9} |
| 5 | 1 | 0 | 14 | 4 | {0, 3, 6, 9} |
| **6** | **1** | **0** | **14** | **6** | **{0, 3, 6, 9}** |
| 7 | 1 | 0 | 14 | $\lfloor N_{\mathrm{BWP}}^{\mathrm{size}}/4 \rfloor$ | {0, 3, 6, 9} |

Referring to Table 4, newly proposed items based on this embodiment are Indexes 1, 2, and 6.

[Option 2]

Method of constructing a new table with a total of 16 indexes by adding 11 new indexes to indexes 11, 12, 13, 14, and 15 of the existing table (i.e., 4-bit indication)

Adding 11 new indexes as shown in Table 5 or Table 6 below may be considered. A total of 15 indexes are configured, and the base station may configure/indicate one of the 15 indexes to the UE through a 4-bit field of the SIB (using the same bit field as the existing operation). That is, a PUCCH format, a first symbol, and the number of symbols may be fixed to 1, 0, and 14, respectively, and a new index may be defined through a combination of a PRB offset, a set of initial CS indexes, and/or a repetition number, etc.

In this instance, a method of adding 11 new indexes to the existing 5 indexes without adding a repetition number item to a new table may be considered. That is, a new index may be proposed through a combination of a PRB offset and/or a set of initial CS indexes, as shown in Table 5.

On the other hand, if a repetition number item is added to a new table, the new table including a total of 16 new indexes is created by combining the existing 5 indexes with the newly introduced repetition number values. That is, the new table is as shown in Table 6. This may be an example of a method of explicitly adding the repetition number to the initial PUCCH resource set table, which is one of the methods based on the embodiment related to the number of repetition transmissions of the initial PUCCH resource set described above.

In this instance, as mentioned above, if the base station intends not to provide the initial PUCCH repetition, the base station may configure/indicate to refer to the existing table through a separate indication method.

【Table 5】

| Table 3: PUCCH resource sets before dedicated PUCCH resource configuration | | | | | |
|---|---|---|---|---|---|
| Index | PUCCH format | First symbol | Number of symbols | PRB offset $RB_{\mathrm{BWP}}^{\mathrm{offset}}$ | Set of initial CS indexes |

| Index | PUCCH format | First symbol | Number of symbols | PRB offset $RB_{\mathrm{BWP}}^{\mathrm{offset}}$ | Set of initial CS indexes |
|---|---|---|---|---|---|
| 0 | 1 | 0 | 14 | 0 | {0, 6} |
| **1** | **1** | **0** | **14** | **4** | **{0, 6}** |
| **2** | **1** | **0** | **14** | **8** | **{0, 6}** |
| **3** | **1** | **0** | **14** | **12** | **{0, 6}** |
| **4** | **1** | **0** | **14** | **0** | **{0, 4, 8}** |
| **5** | **1** | **0** | **14** | **3** | **{0, 4, 8}** |
| **6** | **1** | **0** | **14** | **6** | **{0, 4, 8}** |
| **7** | **1** | **0** | **14** | **9** | **{0, 4, 8}** |
| 8 | 1 | 0 | 14 | 0 | {0, 3, 6, 9} |
| 9 | 1 | 0 | 14 | 2 | {0, 3, 6, 9} |
| 10 | 1 | 0 | 14 | 4 | {0, 3, 6, 9} |
| **11** | **1** | **0** | **14** | **6** | **{0, 3, 6, 9}** |
| 12 | 1 | 0 | 14 | $\lfloor N_{\mathrm{BWP}}^{\mathrm{size}}/4 \rfloor$ | {0, 3, 6, 9} |
| 13-15 | Reserved | | | | |

Referring to Table 5, newly proposed items based on this embodiment are Indexes 1, 2, 3, 4, 5, 6, 7 and 11 (Indexes 13 to 15 are reserved).

【Table 6】

Table 4: PUCCH resource sets before dedicated PUCCH resource configuration

| Index | PUCCH format | First symbol | Number of symbols | PRB offset $RB_{BWP}^{offset}$ | Set of initial CS indexes | Repetition number |
|---|---|---|---|---|---|---|
| **0** | 1 | 0 | 14 | 0 | {0, 6} | **2** |
| **1** | 1 | 0 | 14 | 0 | {0, 6} | **4** |
| **2** | 1 | 0 | 14 | 0 | {0, 6} | **8** |
| **3** | 1 | 0 | 14 | 4 | {0, 6} | **2** |
| **4** | 1 | 0 | 14 | 4 | {0, 6} | **4** |
| **5** | 1 | 0 | 14 | 4 | {0, 6} | **8** |
| **6** | 1 | 0 | 14 | 0 | {0, 3, 6, 9} | **2** |
| **7** | 1 | 0 | 14 | 0 | {0, 3, 6, 9} | **4** |
| **8** | 1 | 0 | 14 | 0 | {0, 3, 6, 9} | **8** |
| **9** | 1 | 0 | 14 | 2 | {0, 3, 6, 9} | **2** |
| **10** | 1 | 0 | 14 | 2 | {0, 3, 6, 9} | **4** |
| **11** | 1 | 0 | 14 | 2 | {0, 3, 6, 9} | **8** |
| **12** | 1 | 0 | 14 | 4 | {0, 3, 6, 9} | **2** |
| **13** | 1 | 0 | 14 | 4 | {0, 3, 6, 9} | **4** |
| **14** | 1 | 0 | 14 | 4 | {0, 3, 6, 9} | **8** |
| **15** | 1 | 0 | 14 | $\left\lfloor N_{BWP}^{size}/4 \right\rfloor$ | {0, 3, 6, 9} | **8** |

Referring to Table 6, newly proposed items based on this embodiment are Indexes 0 to 15, and repetition number was added.

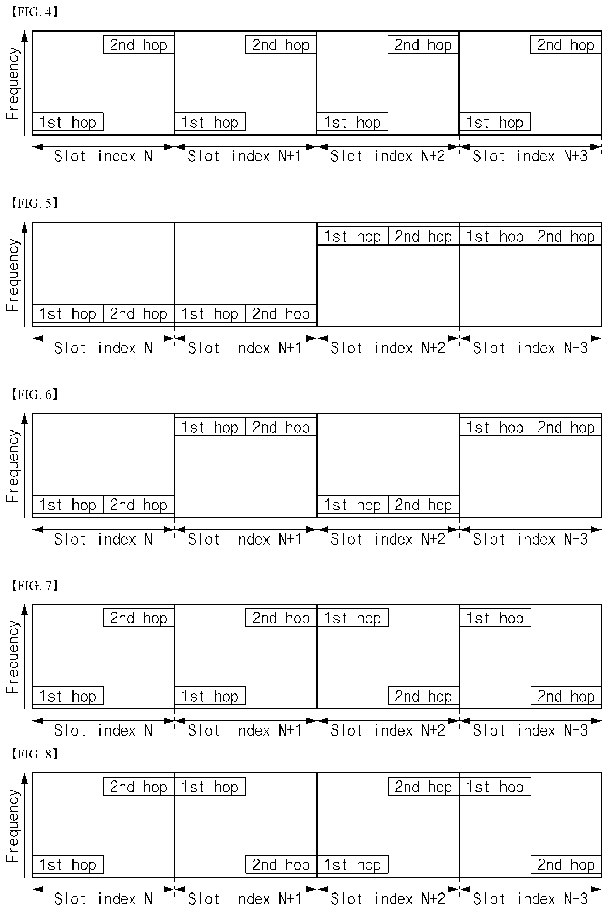

FIGS. 4 to 8 illustrate frequency hopping related to a repetition transmission according to an embodiment of the present disclosure. A frequency hopping (FH) operation in repetition transmission is described in detail below with reference to FIGS. 4 to 8.

Method of configuring frequency hopping in initial PUCCH resource set repetition transmission

If the existing initial PUCCH resource set is used, the UE is configured to perform intra-slot frequency hopping (when it is not an interlace structure). In this instance, even if repetition transmission of an initial PUCCH resource set is considered, the repetition transmission may be performed while maintaining the existing intra-slot frequency hopping operation as it is. For example, when a 1st hop of PUCCH format 1 corresponding to the initial PUCCH resource set is located at a lowest frequency and a 2nd hop is located at a highest frequency based on the configuration of the base station, the UE may perform the repetition transmission while maintaining a position of each hop. Referring to FIG. 4, the UE may perform M (e.g., M=4) repetition transmissions based on the existing FH operation.

To increase the effect of the repetition transmission, it may be considered that the frequency hopping operation is configured as follows.

[Proposed Method I]

Method of applying an inter-slot frequency hopping operation (without intra-slot frequency hopping operation) if repetition transmission of PUCCH for Msg. 4 HARQ-ACK is configured

First, it may be assumed that the number of repetition transmissions of PUCCH for Msg. 4 HARQ-ACK is M (where M is an even number). The UE may transmit it for the first M/2 times without performing the frequency hopping operation in all of intra/inter-slots. The UE may transmit it for the remaining M/2 times by applying only the inter-slot frequency hopping compared to the initial transmission without performing the intra-slot frequency hopping. For example, based on configuration of the base station, a 1st hop of PUCCH format 1 corresponding to an initial PUCCH resource set may be located at a lowest frequency, and a 2nd hop may be located at a highest frequency. Referring to FIG. 5, the UE may perform the repetition transmission based on the lowest frequency (e.g., lowest PRB) without performing the frequency hopping in slot indexes N and N+1. The UE may perform the repetition transmission based on the highest frequency (e.g., highest PRB) in slot indexes N+2 and N+3.

Second, if repetition transmission of PUCCH for Msg. 4 HARQ-ACK is applied, the UE may perform the repetition transmission as follows.

The UE may transmit it in even numbered slots (e.g., slot with even numbered index, slot indexes N and N+2 of FIG. 6) without performing the frequency hopping operation in all of intra/inter-slots.

The UE may transmit it in odd numbered slots (e.g., slot with odd numbered index, slot indexes N+1 and N+3 of FIG. 6) by applying only the inter-slot frequency hopping compared to the initial transmission without performing the intra-slot frequency hopping. For example, based on configuration of the base station, a 1st hop of PUCCH format 1 corresponding to an initial PUCCH resource set may be located at a lowest frequency, and a 2nd hop may be located at a highest frequency. Referring to FIG. 6, the UE may perform the repetition transmission based on the lowest frequency (e.g., lowest PRB) in slot indexes N and N+2. The UE may perform the repetition transmission based on the highest frequency (e.g., highest PRB) in slot indexes N+1 and N+3.

[Proposed Method II]

Method of applying an inter-slot frequency hopping operation together with intra-slot frequency hopping if repetition transmission of PUCCH for Msg. 4 HARQ-ACK is configured

First, if the number of repetition transmissions is M (where M is an even number), the UE may perform the repetition transmission as follows. The UE may transmit it for the first M/2 times based on an intra-slot frequency hopping operation in the same order as the first configured order. The UE may transmit it for the remaining M/2 times based on an intra-slot frequency hopping operation in the opposite order of the first configured order.

That is, the first configured order may be that a 1st hop is a lowest PRB and a 2nd hop is a highest PRB. In this case, the order of intra-slot frequency hopping applied by the UE may be as follows. Up to the first M/2 slots, the 1st hop may be the lowest PRB and the 2nd hop may be the highest PRB in the same order as the first configured order. In the remaining M/2 slots, the 1st hop may be the highest PRB and the 2nd hop may be the lowest PRB. Referring to FIG. 7, in slot indexes N and N+1, the order of intra-slot frequency hopping is lowest PRB → highest PRB. In contrast to the slot indexes N and N+1, in slot indexes N+2 and N+3, the order of intra-slot frequency hopping is highest PRB → lowest PRB.

Second, if repetition transmission is applied, the UE may perform the repetition transmission as follows.

The UE may transmit it in even numbered slots (e.g., slot with even numbered index, slot indexes N and N+2 of FIG. 8) based on an intra-slot frequency hopping operation in the same order as the first configured order.

The UE may transmit it in odd numbered slots (e.g., slot with odd numbered index, slot indexes N+1 and N+3 of FIG. 8) based on an intra-slot frequency hopping operation in the opposite order of the first configured order. That is, the first configured order may be that a 1st hop is a lowest PRB and a 2nd hop is a highest PRB. In this case, the order of intra-slot frequency hopping applied by the UE may be as follows. In the even numbered slots, the 1st hop may be the lowest PRB and the 2nd hop may be the highest PRB in the same order as the first configured order. In the odd numbered slots, the 1st hop may be the highest PRB and the 2nd hop may be the lowest PRB. For example, referring to FIG. 8, in slot indexes N and N+2, the order of intra-slot frequency hopping is lowest PRB → highest PRB. In slot indexes N+1 and N+3, the order of intra-slot frequency hopping is highest PRB → lowest PRB.

In another method, if repetition transmission of PUCCH for Msg. 4 HARQ-ACK is configured, it may be configured so that intra- and/or inter-slot frequency hopping operation is not supported. That is, if a base station indicates a specific parameter (e.g., repetition transmission number or whether to use the repetition transmission, etc.) for a request for the repetition transmission of PUCCH for Msg. 4 HARQ-ACK, the UE may transmit the PUCCH without performing the frequency hopping operation. In this case, the UE may perform the PUCCH repetition transmission without the frequency hopping operation at a frequency location initially configured by the base station.

Alternatively, if repetition transmission of PUCCH for Msg. 4 HARQ-ACK is configured, the intra- and/or inter-slot frequency hopping operation of the UE may be enabled/disabled based on the configuration of the base station. That is, the base station may indicate, to the UE, a specific parameter (e.g., repetition transmission number or whether to use the repetition transmission, etc.) for a request for the repetition transmission of PUCCH for Msg. 4 HARQ-ACK. The base station may configure/indicate, to the UE, information on enabling/disabling the frequency hopping operation together with the specific parameter. In this case, the UE may perform the repetition transmission with or without adding the intra- and/or inter-slot frequency hopping operation based on the configuration/indication of the base station.

The proposed methods may be configured/applied to other UL signals/channels such as PRACH/PUSCH/-PUCCH. In addition, since examples of the proposed method described above can also be included as one of the implementation methods of the present disclosure, it is obvious that they can be considered as a kind of proposed methods. The proposed methods described above may be implemented independently, but may also be implemented in the form of a combination (or merge) of some proposed methods. Information on whether the proposed methods are applied (or information on rules of the proposed methods) may be defined as a rule so that the base station notifies the UE of the application of the proposed methods via a predefined signal (e.g., a physical layer signal or a higher layer signal). For example, the higher layer may include one or more of functional layers such as MAC, RLC, PDCP, RRC, and SDAP.

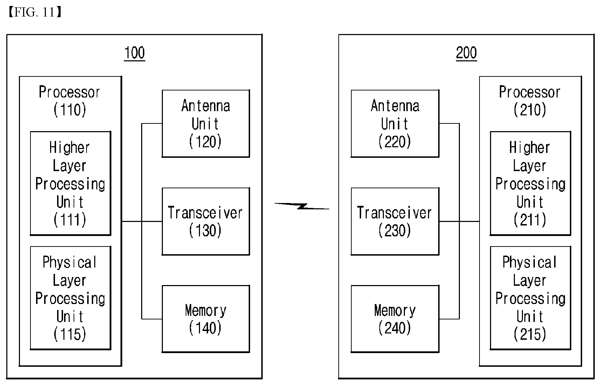

From an implementation perspective, the operations (e.g., operations related to PUCCH for transmission of Msg4 HARQ-ACK information) of the base station/UE according to the above-described embodiments may be processed by a device described below with reference to FIG. 11 (e.g., processors 110 and 210 of FIG. 11).

The operations (e.g., operations related to PUCCH for transmission of Msg4 HARQ-ACK information) of the base station/UE according to the above-described embodiments may be stored in a memory (e.g., memories 140 and 240 of FIG. 11) in the form of a command/program (e.g., instructions, executable codes) for running at least one processor (e.g., processors 110 and 210 of FIG. 11).

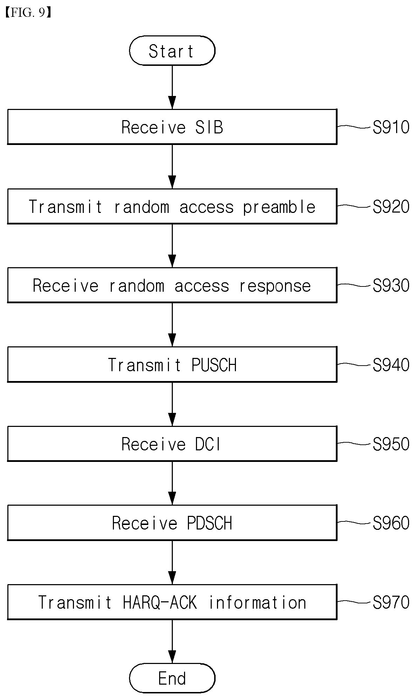

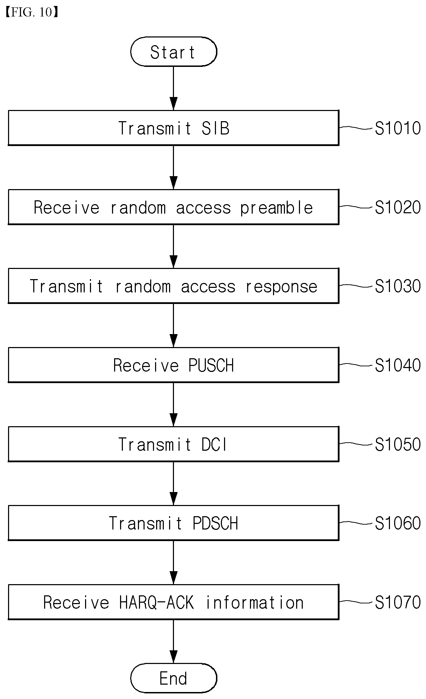

Below, the above-described embodiments are described in detail from a perspective of operations of the UE and the base station with reference to FIGS. 9 and 10. Methods described below are merely distinguished for convenience of explanation. Thus, as long as the methods are not mutually exclusive, it is obvious that partial configuration of any method can be substituted or combined with partial configuration of another method.

FIG. 9 is a flow chart illustrating a method performed by a user equipment according to an embodiment of the present disclosure.

Referring to FIG. 9, a method performed by a user equipment (UE) in a wireless communication system according to an embodiment of the present disclosure may include a SIB reception step S910, a random access preamble transmission step S920, a random access response reception step S930, a PUSCH transmission step S940, a DCI reception step S950, a PDSCH reception step S960, and a HARQ-ACK information transmission step S970.

In the step S910, the UE receives a system information block (SIB) from a base station.

According to an embodiment, a plurality of repetition factors may be configured based on the SIB. That is, the SIB may include information for the plurality of repetition factors. For example, the plurality of repetition factors may include two or more values of 2, 4, and/or 8.

According to an embodiment, the SIB may include parameter pucch-ResourceCommon. The term of 'pucch-ResourceCommon' is an example of a name to refer to a parameter related to the present embodiment, and is not intended to limit the technical idea of the present embodiment to the name. For example, the 'parameter pucch-ResourceCommon' may be replaced with a 'higher layer parameter', a 'first parameter', a 'specific parameter', or a 'parameter related to a PUCCH resource set', or the like. The present embodiment may be based on the proposed method A.

The parameter 'pucch-ResourceCommon' may be related to a PUCCH resource set before dedicated PUCCH resource configuration.

The PUCCH resource set related to the PUCCH may be configured based on one row of a table (e.g., Table 2) in which 16 PUCCH configurations are constituted by 16 rows. In this instance, a value of the parameter 'pucch-ResourceCommon' may be set to only one of indexes representing configurations for repetition of the PUCCH. Specifically, among indexes 0 to 15 representing the 16 rows, the value of the parameter 'pucch-ResourceCommon' may be based on one of indexes related to a specific PUCCH format.

The specific PUCCH format may be PUCCH format 1. A value of the parameter 'pucch-ResourceCommon' may be 11, 12, 13, 14 or 15.

Each of the PUCCH configurations may include at least one of i) a PUCCH format, ii) a first symbol, iii) the number of symbols, iv) a physical resource block (PRB) offset, and/or v) a set of initial cyclic shift (CS) indexes.

In the step S920, the UE transmits a random access preamble to the base station. The random access preamble may be based on Msg 1 of a Type-1 random access procedure (see Table 1).

In the step S930, the UE receives a random access response (RAR) from the base station. The RAR may be based on Msg 2 of the Type-1 random access procedure (see Table 1).

In the step S940, the UE transmits, to the base station, a physical uplink shared channel (PUSCH) scheduled based on an uplink (UL) grant related to the RAR. The PUSCH may be based on Msg 3 of the Type-1 random access procedure.

In the step S950, the UE receives, from the base station, downlink control information (DCI) scheduling a physical downlink shared channel (PDSCH). In this instance, the PDSCH may be related to Msg 4 of the random access procedure. That is, the PDSCH may include a contention resolution identity (ID). For example, the DCI may be based on DCI format 1_0 of Table 1.

The DCI may include a downlink assignment index (DAI) field.

In the step S960, the UE receives the PDSCH from the base station.

In the step S970, the UE transmits, to the base station, Hybrid Automatic Repeat reQuest-ACKnowledgement (HARQ-ACK) information related to the reception of the PDSCH. The HARQ-ACK information may be transmitted based on a repetition of a physical uplink control channel (PUCCH).

According to an embodiment, a repetition factor related to the PUCCH among the plurality of repetition factors may be indicated based on the DAI field. The present embodiment may be based on the proposed method 1. This is described in detail below.

The repetition factor related to the PUCCH may be indicated based on a codepoint based on at least one of i) a first bit of the DAI field and/or ii) a second bit of the DAI field.

The DAI field may be a 2-bit field. The first bit may be a most significant bit (MSB) or a least significant bit (LSB) of the DAI field, and the second bit may be the LSB or the MSB of the DAI field.

The codepoint may be determined by 1) the number of bits based on the number of the plurality of repetition factors or 2) a predefined number of bits (regardless of the number of the plurality of repetition factors). Embodiments based on the 1) and 2) are described in turn below.

According to an embodiment, the codepoint may be determined based on the number of the plurality of repetition factors. In this case, a codepoint when the number of the plurality of repetition factors is 2 may be different from a codepoint when the number of the plurality of repetition factors is greater than 2. This is described in detail below.

Based on the number of the plurality of repetition factors being 2, the codepoint may be one of two codepoints based on the first bit or the second bit. For example, the codepoint may be one of codepoints (0, 1) based on the LSB (or the MSB) of the DAI field.

Each of the two codepoints may be related to each repetition factor determined based on the order of the plurality of repetition factors. This is described in detail assuming that the order configured/indicated with two repetition factors 2 and 4 is {2, 4}. The two codepoints 0 and 1 may be mapped to the two repetition factors 2 and 4 as follows.

For example, the first codepoint 0 (or the second codepoint 1) may be mapped to 2, and the second codepoint 1 (or the first codepoint 0) may be mapped to 4. In other words, based on the DAI field in which the LSB is 0, the first repetition factor 2 (or the second repetition factor 4) of the two repetition factors 2 and 4 may be indicated. Based on the DAI field in which the LSB is 1, the second repetition factor 4 (or the first repetition factor 2) of the two repetition factors 2 and 4 may be indicated.

Based on the number of the plurality of repetition factors being greater than 2, the codepoint may be one of four codepoints based on the first bit and the second bit. As a specific example, the codepoint may be one of codepoints (00, 01, 10, 11) based on 2 bits of the DAI field.

Each of the four codepoints may be related to each repetition factor determined based on the order of the plurality of repetition factors. This is described in detail assuming that the order configured/indicated with three repetition factors 2, 4 and 8 is {2, 4, 8}. The four codepoints 00, 01, 10 and 11 may be mapped to the three repetition factors 2, 4 and 8 as follows.

For example, the first codepoint 00 (or the fourth codepoint 11) may be mapped to 2, the second codepoint 01 (or the third codepoint 10) may be mapped to 4, the third codepoint 10 (or the second codepoint 01) may be mapped to 8, and the fourth codepoint 11 (or the first codepoint 00) may not be used (i.e., the codepoint 11 or 00 corresponds to the reserved state of the proposed method 1 described above).

In other words, based on a value of the DAI field being 00 (or 11), the first repetition factor 2 of the three repetition factors 2, 4 and 8 may be indicated. Based on the value of the DAI field being 01 (or 10), the second repetition factor 4 of the three repetition factors 2, 4 and 8 may be indicated. Based on the value of the DAI field being 10 (or 01), the three repetition factor 8 of the three repetition factors 2, 4 and 8 may be indicated.

Based on ascending or descending order of the codepoint (1/2 bit codepoint) (e.g., 00 → 11 or 11 → 00), the corresponding codepoint may be mapped to each repetition factor (2, 4 or 8) based on the configured order (e.g., {2, 4, 8}) of the three repetition factors (e.g., {2, 4, 8}).

According to an embodiment, the codepoint may be determined by the predefined number of bits (regardless of the number of the plurality of repetition factors). Specifically, the codepoint may be one of four codepoints based on the first bit and the second bit. As a specific example, the codepoint may be one of codepoints (00, 01, 10, 11) based on 2 bits of the DAI field. The mapping between the codepoints and the plurality of repetition factors may be applied in the same way as described above.

Each of the four codepoints may be related to each repetition factor determined based on the order of the plurality of repetition factors. This is described in detail assuming that the order configured/indicated with two repetition factors 2 and 4 is {2, 4}. The four codepoints 00, 01, 10 and 11 may be mapped to the two repetition factors 2 and 4 as follows.

For example, the first codepoint 00 (or the fourth codepoint 11) may be mapped to 2, the second codepoint 01 (or the third codepoint 10) may be mapped to 4, and the third codepoint 10 and the fourth codepoint 11 (or the second codepoint 01 and the first codepoint 00) may not be used (i.e., the codepoints 10 and 11 (or the codepoints 01 and 00) correspond to the reserved state of the proposed method 1 described above).

In other words, based on a value of the DAI field being 00 (or 11), the first repetition factor 2 of the two repetition factors 2 and 4 may be indicated. Based on the value of the DAI field being 01 (or 10), the second repetition factor 4 of the two repetition factors 2 and 4 may be indicated.

According to an embodiment, intra-slot frequency hopping may be applied to the repetition of the PUCCH. For example, a pattern related to the frequency hopping may be based on one of the embodiments based on FIGS. 4, 7 and 8.

The operations based on the above-described steps S910 to S970 may be implemented by a device of FIG. 11. For example, a UE 200 may control one or more transceivers 230 and/or one or more memories 240 to perform the operations based on the steps S910 to S970.

In the method, some of the above-described steps S910 to S970 may be omitted. For example, the method may include the steps S910, S950, S960 and S970.

Below, the above-described embodiments are described in detail from a perspective of base station operation.

Steps S1010 to S1070 described below correspond to the steps S910 to S970 described with reference to FIG. 9. Considering the above correspondence, redundant description is omitted. That is, the detailed description of the base station operation described below can be replaced with the description/embodiment of FIG. 9 corresponding to the base station operation. For example, the description/embodiment of the steps S910 to S970 of FIG. 9 may be additionally applied to the base station operation of the steps S1010 to S1070 described below

FIG. 10 is a flow chart illustrating a method performed by a base station according to another embodiment of the present disclosure.

Referring to FIG. 10, a method performed by a base station in a wireless communication system according to another embodiment of the present disclosure may include a SIB transmission step S1010, a random access preamble reception step S1020, a random access response transmission step S1030, a PUSCH reception step S1040, a DCI transmission step S1050, a PDSCH transmission step S1060, and a HARQ-ACK information reception step S1070.

In the step S1010, the base station transmits a system information block (SIB) to a UE.

In the step S1020, the base station receives a random access preamble from the UE. The random access preamble may be based on Msg 1 of a Type-1 random access procedure (see Table 1).

In the step S1030, the base station transmits a random access response (RAR) to the UE. The RAR may be based on Msg 2 of the Type-1 random access procedure (see Table 1).

In the step S1040, the base station receives, from the UE, a physical uplink shared channel (PUSCH) scheduled based on an uplink (UL) grant related to the RAR. The PUSCH may be based on Msg 3 of the Type-1 random access procedure.

In the step S1050, the base station transmits, to the UE, downlink control information (DCI) scheduling a physical downlink shared channel (PDSCH).

In the step S1060, the base station transmits the PDSCH to the UE.

In the step S1070, the base station receives, from the UE, Hybrid Automatic Repeat reQuest-ACKnowledgement (HARQ-ACK) information related to the reception of the PDSCH. The HARQ-ACK information may be received based on a repetition of a physical uplink control channel (PUCCH).

The operations based on the above-described steps S1010 to S1070 may be implemented by a device of FIG. 11. For example, a base station 100 may control one or more transceivers 130 and/or one or more memories 140 to perform the operations based on the steps S1010 to S1070.

In the method, some of the above-described steps S1010 to S1070 may be omitted. For example, the method may include the steps S1010, S1050, S1060 and S1070.

A device to which an embodiment of the present disclosure is applicable (a device implementing the method/operation according to an embodiment of the present disclosure) is described below with reference to FIG. 11.

FIG. 11 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment in a wireless communication system, the method comprising:

receiving a system information block (SIB);
transmitting a random access preamble;
receiving a random access response (RAR);
transmitting a physical uplink shared channel (PUSCH) scheduled based on an uplink (UL) grant related to the RAR;
receiving downlink control information (DCI) scheduling a physical downlink shared channel (PDSCH), the PDSCH including a contention resolution identity (ID);
receiving the PDSCH; and
transmitting Hybrid Automatic Repeat reQuest-ACKnowledgement (HARQ-ACK) information related to a reception of the PDSCH,
wherein the HARQ-ACK information is transmitted based on a repetition of a physical uplink control channel (PUCCH),
wherein a plurality of repetition factors is configured based on the SIB,
wherein the DCI includes a downlink assignment index (DAI) field,
wherein a repetition factor related to the PUCCH among the plurality of repetition factors is indicated based on the DAI field,

wherein the repetition factor related to the PUCCH is indicated based on a codepoint based on at least one of i) a first bit of the DAI field and/or ii) a second bit of the DAI field, and
wherein the codepoint is determined based on a number of the plurality of repetition factors.

2. The method of claim 1, wherein the DAI field is a 2-bit field, and
wherein the first bit is a most significant bit (MSB) or a least significant bit (LSB) of the DAI field, and the second bit is the LSB or the MSB of the DAI field.

3. The method of claim 1, wherein based on the number of the plurality of repetition factors being 2, the codepoint is one of two codepoints based on the first bit or the second bit.

4. The method of claim 3, wherein each of the two codepoints is related to each repetition factor determined based on an order of the plurality of repetition factors.

5. The method of claim 1, wherein based on the number of the plurality of repetition factors being greater than 2, the codepoint is one of four codepoints based on the first bit and the second bit.

6. The method of claim 5, wherein each of the four codepoints is related to each repetition factor determined based on an order of the plurality of repetition factors.

7. The method of claim 1, wherein the SIB includes a parameter pucch-ResourceCommon,

wherein the parameter pucch-ResourceCommon is related to a PUCCH resource set before a dedicated PUCCH resource configuration,
wherein the PUCCH resource set related to the PUCCH is configured based on one row of a table in which 16 PUCCH configurations are constituted by 16 rows, and
wherein, among indexes 0 to 15 representing the 16 rows, a value of the parameter pucch-ResourceCommon is based on one of indexes related to a specific PUCCH format.

8. The method of claim 7, wherein the specific PUCCH format is PUCCH format 1, and
wherein a value of the parameter pucch-ResourceCommon is 11, 12, 13, 14 or 15.

9. The method of claim 7, wherein each of the PUCCH configurations includes at least one of i) a PUCCH format, ii) a first symbol, iii) a number of symbols, iv) a physical resource block (PRB) offset, and/or v) a set of initial cyclic shift (CS) indexes.

10. The method of claim 7, wherein an intra-slot frequency hopping is applied to the repetition of the PUCCH.

11. A user equipment operating in a wireless communication system, the user equipment comprising:

one or more transceivers;
one or more processors; and
one or more memories operably connectable to the one or more processors and storing instructions that configure the one or more processors to perform operations based on being executed by the one or more processors,
wherein the operations comprise:

receiving a system information block (SIB);
transmitting a random access preamble;
receiving a random access response (RAR);
transmitting a physical uplink shared channel (PUSCH) scheduled based on an uplink (UL) grant related to the RAR;
receiving downlink control information (DCI) scheduling a physical downlink shared channel (PDSCH), the PDSCH including a contention resolution identity (ID);
receiving the PDSCH; and
transmitting Hybrid Automatic Repeat reQuest-ACKnowledgement (HARQ-ACK) information related to a reception of the PDSCH,
wherein the HARQ-ACK information is transmitted based on a repetition of a physical uplink control channel (PUCCH),

wherein a plurality of repetition factors is configured based on the SIB,

wherein the DCI includes a downlink assignment index (DAI) field,

wherein a repetition factor related to the PUCCH among the plurality of repetition factors is indicated based on the DAI field,

wherein the repetition factor related to the PUCCH is indicated based on a codepoint based on at least one of i) a first bit of the DAI field and/or ii) a second bit of the DAI field, and

wherein the codepoint is determined based on a number of the plurality of repetition factors.

12. A device comprising:

one or more memories; and

one or more processors operably connected to the one or more memories,

wherein the one or more memories include instructions that configure the one or more processors to perform operations based on being executed by the one or more processors,

wherein the operations comprise:

receiving a system information block (SIB);

transmitting a random access preamble;

receiving a random access response (RAR);

transmitting a physical uplink shared channel (PUSCH) scheduled based on an uplink (UL) grant related to the RAR;

receiving downlink control information (DCI) scheduling a physical downlink shared channel (PDSCH), the PDSCH including a contention resolution identity (ID);

receiving the PDSCH; and

transmitting Hybrid Automatic Repeat reQuest-ACKnowledgement (HARQ-ACK) information related to a reception of the PDSCH,

wherein the HARQ-ACK information is transmitted based on a repetition of a physical uplink control channel (PUCCH),

wherein a plurality of repetition factors is configured based on the SIB,

wherein the DCI includes a downlink assignment index (DAI) field,

wherein a repetition factor related to the PUCCH among the plurality of repetition factors is indicated based on the DAI field,

wherein the repetition factor related to the PUCCH is indicated based on a codepoint based on at least one of i) a first bit of the DAI field and/or ii) a second bit of the DAI field, and

wherein the codepoint is determined based on a number of the plurality of repetition factors.

13. One or more non-transitory computer readable mediums storing one or more instructions,

wherein the one or more instructions executable by one or more processors configure the one or more processors to perform operations,

wherein the operations comprise:

receiving a system information block (SIB);

transmitting a random access preamble;

receiving a random access response (RAR);

transmitting a physical uplink shared channel (PUSCH) scheduled based on an uplink (UL) grant related to the RAR;

receiving downlink control information (DCI) scheduling a physical downlink shared channel (PDSCH), the PDSCH including a contention resolution identity (ID);

receiving the PDSCH; and

transmitting Hybrid Automatic Repeat reQuest-ACKnowledgement (HARQ-ACK) information related to a reception of the PDSCH,

wherein the HARQ-ACK information is transmitted based on a repetition of a physical uplink control channel (PUCCH),

wherein a plurality of repetition factors is configured based on the SIB,

wherein the DCI includes a downlink assignment index (DAI) field,

wherein a repetition factor related to the PUCCH among the plurality of repetition factors is indicated based on the DAI field,

wherein the repetition factor related to the PUCCH is indicated based on a codepoint based on at least one of i) a first bit of the DAI field and/or ii) a second bit of the DAI field, and

wherein the codepoint is determined based on a number of the plurality of repetition factors.

14. A method performed by a base station in a wireless communication system, the method comprising:

transmitting a system information block (SIB);
receiving a random access preamble;
transmitting a random access response (RAR);
receiving a physical uplink shared channel (PUSCH) scheduled based on an uplink (UL) grant related to the RAR;
transmitting downlink control information (DCI) scheduling a physical downlink shared channel (PDSCH), the PDSCH including a contention resolution identity (ID);
transmitting the PDSCH; and
receiving Hybrid Automatic Repeat reQuest-ACKnowledgement (HARQ-ACK) information related to a reception of the PDSCH,
wherein the HARQ-ACK information is received based on a repetition of a physical uplink control channel (PUCCH),
wherein a plurality of repetition factors is configured based on the SIB,
wherein the DCI includes a downlink assignment index (DAI) field,
wherein a repetition factor related to the PUCCH among the plurality of repetition factors is indicated based on the DAI field,
wherein the repetition factor related to the PUCCH is indicated based on a codepoint based on at least one of i) a first bit of the DAI field and/or ii) a second bit of the DAI field, and
wherein the codepoint is determined based on a number of the plurality of repetition factors.

15. A base station operating in a wireless communication system, the base station comprising:

one or more transceivers;
one or more processors; and
one or more memories operably connectable to the one or more processors and storing instructions that configure the one or more processors to perform operations based on being executed by the one or more processors,
wherein the operations comprise:

transmitting a system information block (SIB);
receiving a random access preamble;
transmitting a random access response (RAR);
receiving a physical uplink shared channel (PUSCH) scheduled based on an uplink (UL) grant related to the RAR;
transmitting downlink control information (DCI) scheduling a physical downlink shared channel (PDSCH), the PDSCH including a contention resolution identity (ID);
transmitting the PDSCH; and
receiving Hybrid Automatic Repeat reQuest-ACKnowledgement (HARQ-ACK) information related to a reception of the PDSCH,
wherein the HARQ-ACK information is received based on a repetition of a physical uplink control channel (PUCCH),
wherein a plurality of repetition factors is configured based on the SIB,
wherein the DCI includes a downlink assignment index (DAI) field,
wherein a repetition factor related to the PUCCH among the plurality of repetition factors is indicated based on the DAI field,
wherein the repetition factor related to the PUCCH is indicated based on a codepoint based on at least one of i) a first bit of the DAI field and/or ii) a second bit of the DAI field, and
wherein the codepoint is determined based on a number of the plurality of repetition factors.

【FIG. 1】

INITIAL CELL
SEARCH

SYSTEM
INFORMATION
RECEPTION

RANDOM ACCESS PROCEDURE

GENERAL DL/UL Tx/Rx

| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |

S101    S102    S103    S104    S105    S106    S107    S108

· DL/UL ACK/NACK
· UE CQI/PMI RI REPORT
  USING PUSCH AND PUCCH

【FIG. 2】

| UE | | BS |

MasterInformationBlock

SystemInformationBlockType1

System Information Request

SystemInformation messages

【FIG. 3】

· Contention based

UE
gNB

(a)

RA preamble (MSG1)

RA response (MSG2)

Scheduled Transmission (MSG3)

Contention Resolution (MSG4)

· Contention-free

UE
gNB

(b)

RA preamble assignment

RA preamble (MSG1)

RA response (MSG2)

【FIG. 4】

【FIG. 5】

【FIG. 6】

【FIG. 7】

【FIG. 8】

【FIG. 9】

```
                    ┌──────────┐
                    │  Start   │
                    └────┬─────┘
                         │
                         ▼
        ┌────────────────────────────────┐
        │        Receive SIB             │──── S910
        └────────────────┬───────────────┘
                         │
                         ▼
        ┌────────────────────────────────┐
        │  Transmit random access preamble │──── S920
        └────────────────┬───────────────┘
                         │
                         ▼
        ┌────────────────────────────────┐
        │  Receive random access response │──── S930
        └────────────────┬───────────────┘
                         │
                         ▼
        ┌────────────────────────────────┐
        │        Transmit PUSCH          │──── S940
        └────────────────┬───────────────┘
                         │
                         ▼
        ┌────────────────────────────────┐
        │        Receive DCI             │──── S950
        └────────────────┬───────────────┘
                         │
                         ▼
        ┌────────────────────────────────┐
        │        Receive PDSCH           │──── S960
        └────────────────┬───────────────┘
                         │
                         ▼
        ┌────────────────────────────────┐
        │  Transmit HARQ-ACK information │──── S970
        └────────────────┬───────────────┘
                         │
                         ▼
                    ┌──────────┐
                    │   End    │
                    └──────────┘
```

【FIG. 10】

```
                    ┌─────────────┐
                    │    Start    │
                    └─────────────┘
                           │
                           ▼
        ┌──────────────────────────────────┐
        │          Transmit SIB            │────S1010
        └──────────────────────────────────┘
                           │
                           ▼
        ┌──────────────────────────────────┐
        │   Receive random access preamble │────S1020
        └──────────────────────────────────┘
                           │
                           ▼
        ┌──────────────────────────────────┐
        │  Transmit random access response │────S1030
        └──────────────────────────────────┘
                           │
                           ▼
        ┌──────────────────────────────────┐
        │          Receive PUSCH           │────S1040
        └──────────────────────────────────┘
                           │
                           ▼
        ┌──────────────────────────────────┐
        │          Transmit DCI            │────S1050
        └──────────────────────────────────┘
                           │
                           ▼
        ┌──────────────────────────────────┐
        │         Transmit PDSCH           │────S1060
        └──────────────────────────────────┘
                           │
                           ▼
        ┌──────────────────────────────────┐
        │    Receive HARQ-ACK information  │────S1070
        └──────────────────────────────────┘
                           │
                           ▼
                    ┌─────────────┐
                    │     End     │
                    └─────────────┘
```

【FIG. 11】

## INTERNATIONAL SEARCH REPORT

| International application No. |
| --- |
| **PCT/KR2023/013963** |

| | |
| --- | --- |
| **A.** | **CLASSIFICATION OF SUBJECT MATTER** |

**H04W 72/232**(2023.01)i; **H04W 72/21**(2023.01)i; **H04L 1/08**(2006.01)i; **H04L 1/18**(2006.01)i; **H04W 84/06**(2009.01)i; **H04L 1/16**(2006.01)i; **H04L 5/00**(2006.01)i

According to International Patent Classification (IPC) or to both national classification and IPC

| | |
| --- | --- |
| **B.** | **FIELDS SEARCHED** |

Minimum documentation searched (classification system followed by classification symbols)

H04W 72/232(2023.01); H04L 1/18(2006.01); H04L 27/26(2006.01); H04W 72/04(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: HARQ-ACK, repetition factor, DAI, PUCCH, codepoint, PDSCH, DCI, contention resolution identity, Random Access Preamble, SIB, RAR, UL grant

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | KR 10-2021-0135928 A (SAMSUNG ELECTRONICS CO., LTD.) 16 November 2021 (2021-11-16)<br>  See paragraphs [0050]-[0094]; and figure 2. | 1-15 |
| A | US 2021-0336726 A1 (NTT DOCOMO, INC.) 28 October 2021 (2021-10-28)<br>  See paragraphs [0031]-[0329]; and claim 1. | 1-15 |
| A | VIVO. Remaining issues on HARQ-ACK enhancements for Rel-17 URLLC. R1-2203513, 3GPP TSG RAN WG1#109-e, e-Meeting. 25 April 2022.<br>  See sections 2-3. | 1-15 |
| A | ZTE. Discussion on HARQ-ACK enhancements for eURLLC. R1-2110914, 3GPP TSG RAN WG1 Meeting #107-e, e-Meeting. 06 November 2021.<br>  See sections 2-2.1. | 1-15 |
| A | US 2021-0100004 A1 (QUALCOMM INCORPORATED) 01 April 2021 (2021-04-01)<br>  See paragraphs [0092]-[0095]; and figure 6. | 1-15 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 December 2023** | **27 December 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/013963**

| Patent document cited in search report | | | Publication date (day/month/year) | Patent family member(s) | | | Publication date (day/month/year) |
|---|---|---|---|---|---|---|---|
| KR | 10-2021-0135928 | A | 16 November 2021 | CN | 113630897 | A | 09 November 2021 |
| | | | | EP | 3917270 | A2 | 01 December 2021 |
| | | | | EP | 3917270 | A3 | 20 April 2022 |
| | | | | US | 2021-0352735 | A1 | 11 November 2021 |
| US | 2021-0336726 | A1 | 28 October 2021 | CN | 112753183 | A | 04 May 2021 |
| | | | | EP | 3832928 | A1 | 09 June 2021 |
| | | | | JP | 2021-026296 | A1 | 05 August 2021 |
| | | | | JP | 7216100 | B2 | 31 January 2023 |
| | | | | WO | 2020-026296 | A1 | 06 February 2020 |
| US | 2021-0100004 | A1 | 01 April 2021 | US | 11503609 | B2 | 15 November 2022 |

Form PCT/ISA/210 (patent family annex) (July 2022)